# EUROPEAN PATENT SPECIFICATION

(11) **EP 2 366 921 B1**
(45) Date of publication and mention of the grant of the patent: **22.08.2012**
(21) Application number: 10155082.0
(22) Date of filing: 01.03.2010
(51) Int. Cl.: F16K 11/076, F16K 11/085, F16K 31/04

(54) **Temperature controlling valve**
Temperatursteuerungsventil
Vanne à température contrôlée

(43) Date of publication of application: 21.09.2011
(73) Proprietor: Globe Union Industrial Corp., Taichung (TW)
(72) Inventor: Chang, Yuanhao, TAICHUNG (TW); Lo, Tsungyi, TAICHUNG (TW)
(74) Representative: Chaillot, Geneviève

(56) References cited:
- FR-A1- 2 872 240
- JP-A- 2000 179 715
- JP-A- 2008 057 667

## Description

### BACKGROUND OF THE INVENTION

### Field of the Invention

The present invention relates to a temperature controlling valve that is adapted for a digital showering system to control a temperature of mixed hot and cold water, obtaining a desired showering temperature.

### Description of the Prior Art

Conventional temperature controlling valve is controlled in a disc rotating manner, and includes two elongated holes to flow cold and hot waters respectively, and when one disc rotates relative another disc, an inverse relationship exists between the cross sectional area of a first pore to flow hot water and the cross sectional area of a second pore to flow cold water so as to become increased or decreased relatively, controlling cold-water and hot-water flowing amount to obtain a desired temperature. The discs are driven by a driving motor, wherein they are forced equally to engage with each other tightly, thereby preventing water from leak. However, such an operation will cause a large friction resistance. To overcome the friction resistance, a driving motor with high torque output is adapted for the temperature controlling valve at high cost and in a large size.

Furthermore, the conventional temperature controlling valve can not be used to control temperature precisely, because the rotating travel of the disc is limited.

The present invention has arisen to mitigate and/or obviate the afore-described disadvantages.

### SUMMARY OF THE INVENTION

The primary object of the present invention is to provide a temperature controlling valve that is capable of overcoming the shortcomings of the conventional temperature controlling valve.

Another object of the present invention is to provide a temperature controlling valve adapted for a digital showering system to control a temperature of mixed hot and cold water, obtaining a desired showering temperature.

A temperature controlling valve in accordance with the present invention comprises:
a base including a first end wall, a second end wall, and a peripheral wall; among the first end wall, the second end wall, and the peripheral wall being defined a receiving groove, the peripheral wall having a first tunnel for flow of hot water and a second tunnel for flow of cold water at two different axial positions respectively, said tunnels communicating with the receiving groove, the peripheral wall including a first passage arranged on one side thereof proximate to the second end wall so as to communicate with the receiving groove;
a temperature control set installed in the receiving groove of the base, and between the temperature control set and the receiving groove being defined a first external chamber to receive the hot water and to communicate with the first tunnel, and a second external chamber to receive the cold water and to communicate with the second tunnel; the temperature control set including a first internal chamber to receive the hot water and a second internal chamber to receive the cold water, both of which are in communication with the first passage; the temperature control set further including a casing, and a valve core movably contacting with the casing to be driven to rotate;
a water supplying means provided in the casing and the valve core of the temperature control seat, and including a first pore to flow the hot water and to communicate the first external chamber with the first internal chamber, including a second pore to flow the cold water and to communicate the second external chamber with the second internal chamber, including a first shield to close the first pore, and including a second shield to close the second pore; a part of the first pore which is not closed by the first shield defining a cross sectional area to flow the hot water, and a part of the second pore which is not closed by the second shield defining a cross sectional area to flow the cold water; the cross sectional area of the first pore to flow the hot water and the cross sectional area of the second pore to flow the cold water are relatively increased or decreased with the rotation of the valve core in the casing.

### BRIEF DESCRIPTION OF THE DRAWINGS

Fig. 1 is a perspective view showing a temperature controlling valve being installed to an outlet valve seat according to a first embodiment of the present invention;
Fig. 2 is a perspective view showing the cross section of the outlet valve seat of Fig. 1;
Fig. 3 is another perspective view showing the cross section of the outlet valve seat of Fig. 1;
Fig. 4 is a cross sectional view showing the assembly of the temperature controlling valve according to the first embodiment of the present invention;
Fig. 5 is a perspective view showing the exploded components of a part of the temperature controlling valve of the first embodiment of the present invention;
Fig. 6 is a perspective view showing the cross section of the assembly of a temperature control set of the temperature controlling valve according to the first embodiment of the present invention;
Fig. 7 is a perspective view showing the cross section of the assembly of a casing of the temperature controlling valve according to the first embodiment of the present invention;
Fig. 8 is a plan view showing a valve core of the temperature controlling valve according to the first embodiment of the present invention;
Fig. 9 is a cross sectional view of a temperature control set of the temperature controlling valve according to the first embodiment of the present invention;
Fig. 10 is a perspective view showing a temperature controlling valve being installed to another outlet valve seat according to a second embodiment of the present invention;
Fig. 11 is a perspective view showing a cross section of an outlet valve seat of Fig. 10;
Fig. 12 is a perspective view showing the assembly of a part of the outlet valve seat of Fig. 10;
Fig. 13 is a perspective view showing the cross section of a part of the temperature controlling valve according to a second embodiment of the present invention;

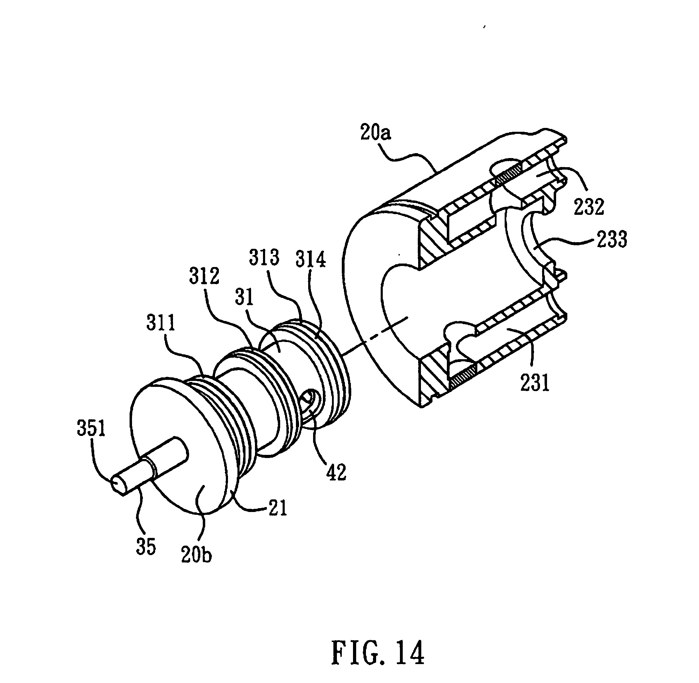

Fig. 14 is a perspective view showing the cross section of the exploded components of a part of the temperature controlling valve according to the second embodiment of the present invention;

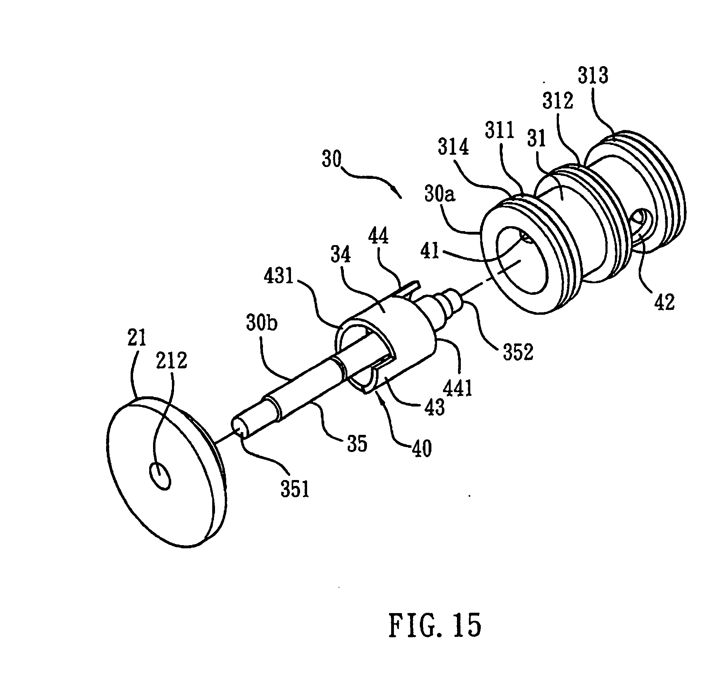

Fig. 15 is a perspective view showing the exploded components of a temperature control set according to the second embodiment of the present invention;
Fig. 16 is a perspective view showing the assembly of a part of a temperature controlling valve according to a third embodiment of the present invention;
Fig. 17 is a perspective view showing the cross section of a part of the temperature controlling valve according to the third embodiment of the present invention;
Fig. 18 is a perspective view showing the assembly of a temperature control set of the temperature controlling valve according to the third embodiment of the present invention;
Fig. 19 is a cross sectional view showing the assembly of the temperature control set of the temperature controlling valve according to the third embodiment of the present invention;
Fig. 20 is a perspective view showing the exploded components of the temperature control set of the temperature controlling valve according to the third embodiment of the present invention;
Fig. 21 is a perspective view showing the cross section of a part of a temperature controlling valve according to a fourth embodiment of the present invention;
Fig. 22 is a perspective view showing the assembly of a temperature control set of the temperature controlling valve according to the fourth embodiment of the present invention;
Fig. 23 is a cross sectional view showing the assembly of the temperature control set of the temperature controlling valve according to the fourth embodiment of the present invention;
Fig. 24 is a perspective view showing the exploded components of the temperature control set of the temperature controlling valve according to the fourth embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

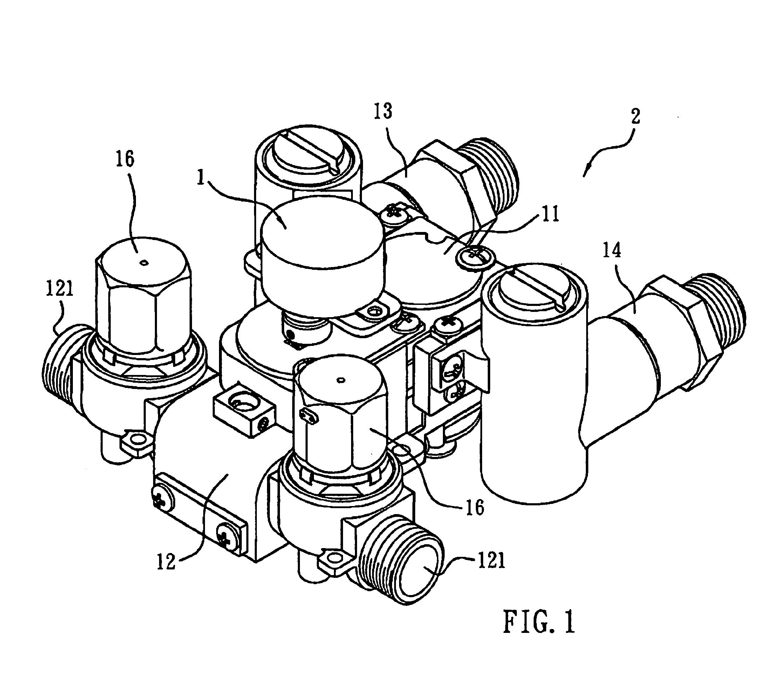

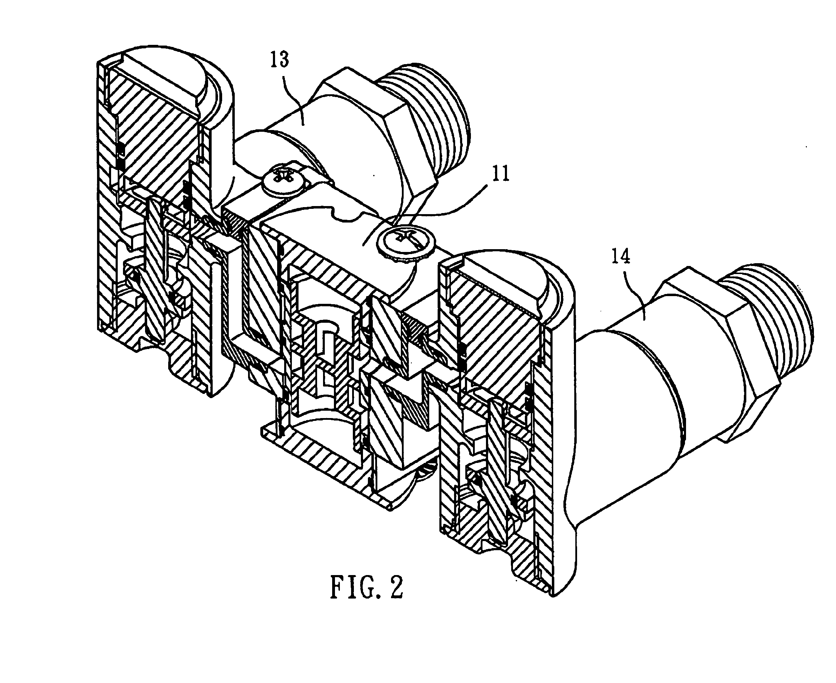

Referring to Figs. 1-3, a temperature controlling valve 1 according to a first embodiment of the present invention is used in a digital showering system and installed to an outlet valve seat 2, the outlet valve seat 2 includes a pressure balance valve 11 installed to an inlet end of the temperature controlling valve 1; an outlet piping 12 to receive mixed cold and hot water installed to an outlet end of the temperature controlling valve 1; a first inlet piping 13 to receive cold water from a cold-water flowing piping and a second inlet piping 14 to receive hot water from a hot-water flowing piping, both of which are installed to an inlet end of the pressure balance valve 11; a temperature sensor 15 installed in the outlet piping 12 to sense temperature of the mixed cold and hot water so as to facilitate operation of the temperature valve 1; two solenoid valves 16 installed to two different outflow channels of the outlet piping 12 so as to control opening and closing of the outflow channels respectively. After the cold and the hot waters flow into the pressure balance valve 11 through the first and the second inlet pipings 13, 14, the cold and the hot waters are adjusted automatically to have a temperature balance therebetween and then flow into the temperature controlling valve 1 at a proper rate to be mixed together, the mixed cold and hot water further flows to the outlet piping 12 to be controlled by the solenoid valves 16 so that the mixed cold and hot water is supplied from an outlet 121.

The temperature controlling valve 1 can adjust inflow amount and mixed rate of the cold and the hot waters automatically based on a temperature sensed by the temperature sensors 15 to control a temperature of the mixed cold and hot water. The outlet valve seat 2 is well-known, therefore further remarks are omitted.

The temperature controlling valve 1 includes a housing 20, a temperature control set 30, a water supplying means 40, and a driving motor 50.

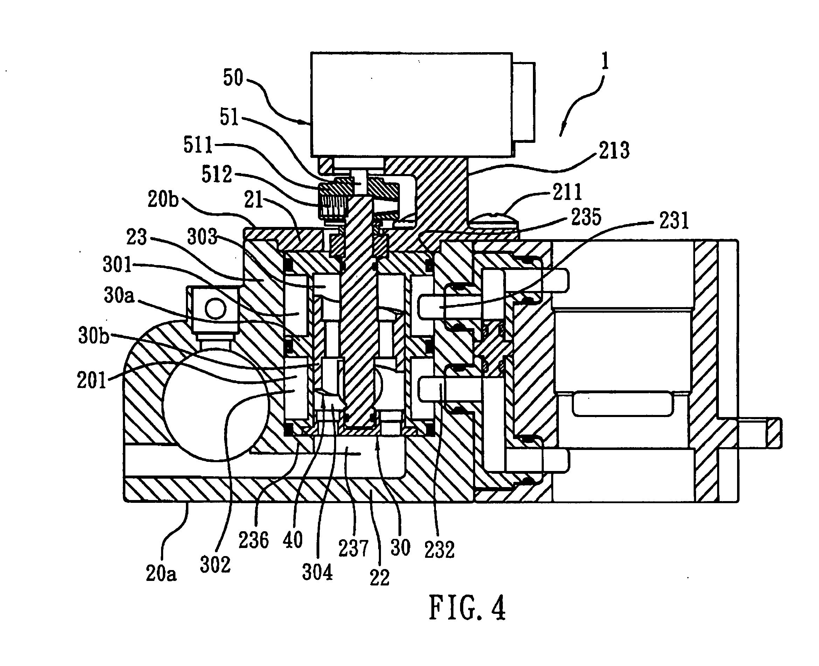

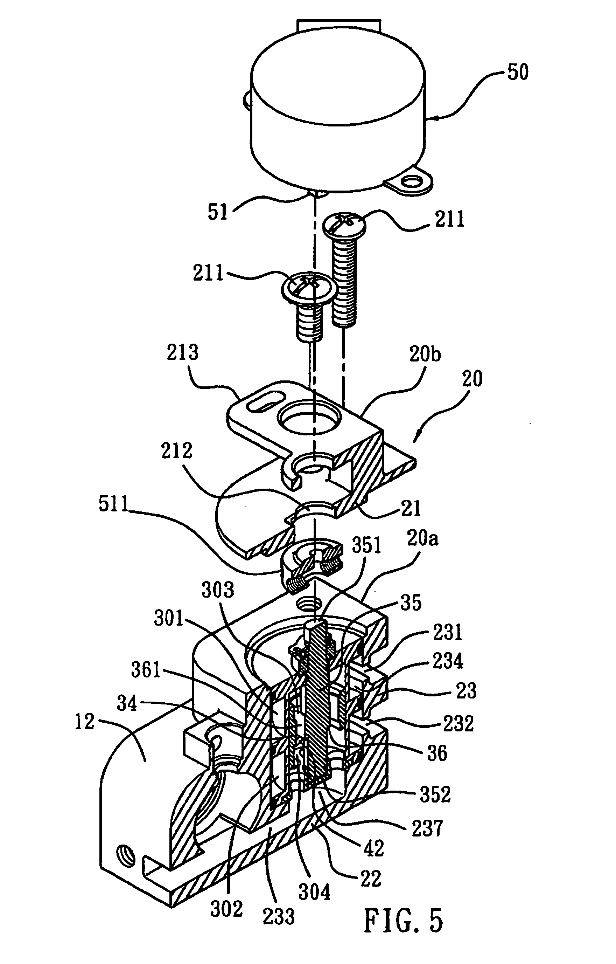

The base 20 as shown in Figs. 4 and 5, includes a first end wall 21 disposed on a top end thereof, a second end wall 22 mounted on a bottom end thereof, and a peripheral wall 23 fixed between the first and the second end walls 21, 22; among the first end wall 21, the second end wall 22, and the peripheral wall 23 is defined a receiving groove 201; the peripheral wall 23 extends at two different axial positions, e.g., at a higher axial position and a lower axial position, to pass through a first tunnel 231 for flowing hot water and through a second tunnel 232 for flowing cold water which are in communication with the receiving groove 201 and the pressure balance valve 11 so as to flow the hot and the cold waters from the pressure balance valve 11 into the receiving groove 201 individually; the peripheral wall 23 includes a first passage 233 arranged on one side thereof proximate to the second end wall 22 so as to communicate with the receiving groove 201 and the outlet piping 12 such that the cold and the hot waters mix in the receiving groove 201 and further flow to the outlet piping 12.

The base 20 further includes a body 20a and an upper housing 20b, the body 20a includes the peripheral wall 23 and the second end wall 22 formed therein, and peripheral wall 23 includes a cylinder fence 234 formed thereon and an opening 235 attached on a top end thereof, the second end wall 22 includes a positioning fence 236 disposed therein to define a first hole 237 to communicate with the first passage 233.

The peripheral wall 23, the second end wall 22, and the outlet piping 12 are integrally formed.

The upper housing 20b is positioned in the opening 235 of the body 20a to form the first end wall 21 and is retained with a top end of the peripheral wall 23 and a top end of the pressure balance valve 11 by using a plurality of screw bolts 211 so that the opening 235 is closed properly, and the receiving groove 201 is defined between the opening 235 and the body 20a.

The upper housing 20b includes a second hole 212 mounted on a central portion thereof, and includes a motor holder 213 extending from one side thereof adjacent to the pressure balance valve 11.

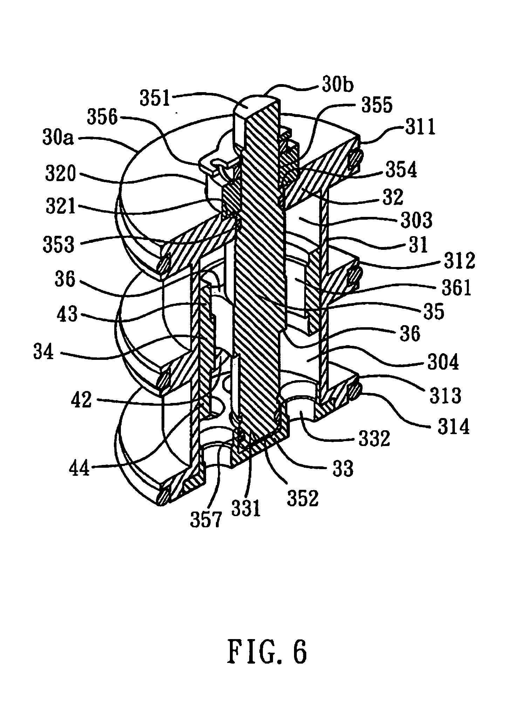

The temperature control set 30 as illustrated in Figs. 6-8, are installed in the receiving groove 201 of the base 20, and between the temperature control set 30 and the receiving groove 201 are defined a first external chamber 301 to receive hot water and to communicate with the first tunnel 231, a second external chamber 302 to receive cold water and to communicate with the second tunnel 232; the temperature control set 30 includes a first internal chamber 303 to receive hot water and a second internal chamber 304 to receive cold water, both of which are in communication with the first passage 233; the temperature control set 30 further includes a casing 30a, a slidable sleeve attached in the casing 30a, and a valve core 30b driven to rotate at an original position.

The casing 30a includes a cylinder first peripheral rim 31, a first end rim 32 integrally connected onto a top end of the first peripheral rim 31, and a second end rim 33 arranged on a bottom end of the first peripheral rim 31; the first peripheral rim 31 includes a first projected wall 311, a second projected wall 312, and a third projected wall 313 radially extending from a top portion, a middle portion, and a bottom portion thereof respectively, and the first, the second, and the third projected walls 311, 312, 313 individually includes a first seal ring 314 retained thereon to engage with the receiving groove 201 of the base 20 so that between the first peripheral rim 31 of the casing 30a and the inner fence 234 of the receiving groove 201 of the base 20 are spaced apart to form the first external chamber 301 by using the first seal rings 314 of the first, the second, and the third projected walls 311, 312, and 313.

The first end rim 32 includes a positioning slot 321 disposed on a central portion thereof to receive a bearing 320, and a top edge of the bearing 320 is biased against by the second hole 212, the positioning slot 321 includes an aperture 322 mounted on a central portion thereof.

The second end rim 33 includes a closed fixing segment 331, and the fixing segment 331 includes a number of downward decreased first bores 332 fixed therearound to communicate with the second internal chamber 304 so as to further communicate with the first passage 233 via the first hole 237.

The valve core 30b includes a cylinder second peripheral rim 34, a centrally axial segment 35 extending along the second peripheral rim 34, and an isolating rim 36 integrally connecting with the second peripheral rim 34 and the centrally axial segment 35.

The second peripheral rim 34 and the first peripheral rim 31 contact with each other as they rotate.

The centrally axial segment 35 of the valve core 30b includes a first end portion 351 and a second end portion 352; the first end portion 351 extends out of the second hole 212 of the upper housing 20b through the aperture 322 of the casing 30a, the bearing 320, and the second hole 212 of the upper housing 20b, wherein the centrally axial segment 35 includes a second seal ring 353 disposed on an upper side thereof to engage with the aperture 322, and the second seal ring 353 includes a stepped rim 354 formed on an upper side thereof to limit the bearing 320, the stepped rim 354 includes a pivotal portion 355 fixed on an upper side thereof to be fitted to the bearing 320, and the pivotal portion 355 includes a C-shaped retainer 356 fitted to an upper side thereof to engage with the bearing 320, such that a top end of the centrally axial segment 35 of the valve core 30b rotates with the casing 30a. The centrally axial segment 35 includes a third seal ring 357 retained thereon adjacent to the second end portion 352 to engage with the fixing segment 331 of the second end rim 33 of the casing 30a so as to actuate the valve core 30b to rotate smoothly.

The isolating rim 36 of the valve core 30b is used to separate the first internal chamber 303 from the second internal chamber 304, and includes a plurality of second bores 361 arranged thereon to communicate the first internal chamber 303 with the second internal chamber 304.

The first internal chamber 303 includes the centrally axial segment 35, the second peripheral rim 34, the first peripheral rim 31, and the first end rim 32 defined therein. The second internal chamber 304 includes the centrally axial segment 35, the second peripheral rim 34, the first peripheral rim 31, and the second end rim 33 defined therein.

The water supplying means 40 is used in the casing 30a and the valve core 30b of the temperature control seat 30, and includes a first pore 41 to flow hot water and to communicate with the first external chamber 301 and the first internal chamber 303, includes a second pore 42 to flow cold water and to communicate with the second external chamber 302 and the second internal chamber 304, includes a first shield 43 to close the first pore 41, and includes a second shield 44 to close the second pore 42; a part of the first pore 41 where is not closed by the first shield 43 is defined a cross sectional area to flow the hot water, and a part of the second pore 42 where is not closed by the second shield 44 is defined a cross sectional area to flow the cold water; a cross sectional area of the first pore 41 to flow the not water and the cross sectional area of the second pore 42 to flow the cold water are relatively increased or decreased with the rotation of the valve core 30b in the casing 30a.

The first and the second pores 41, 42 are disposed at a higher and a lower axial positions of the first peripheral rim 31 of the casing 30a, and arranged at two symmetrical positions of the first peripheral rim 31 spaced 180 degree apart from each other. The first pore 41 is fixed on the first peripheral rim 31 so that the first external chamber 301 communicates with the first internal chamber 303. The second pore 42 is secured on the first peripheral rim 31 so as to communicate the second external chamber 302 with the second internal chamber 304.

The first and the second shields 43, 44 are arranged to a top and a bottom sides of the second peripheral rim 34 of the valve core 30b respectively.

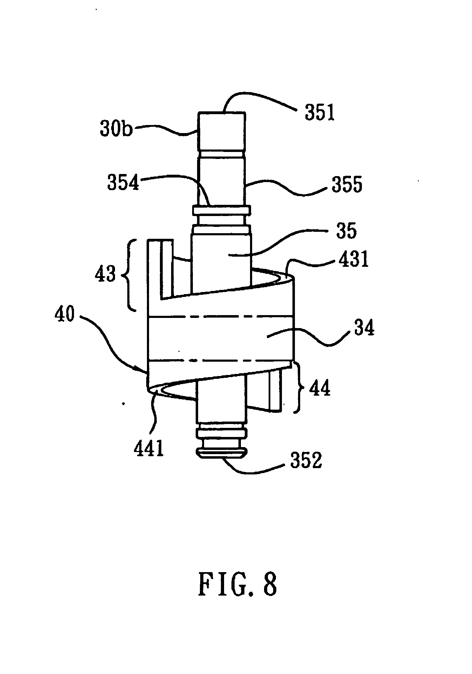

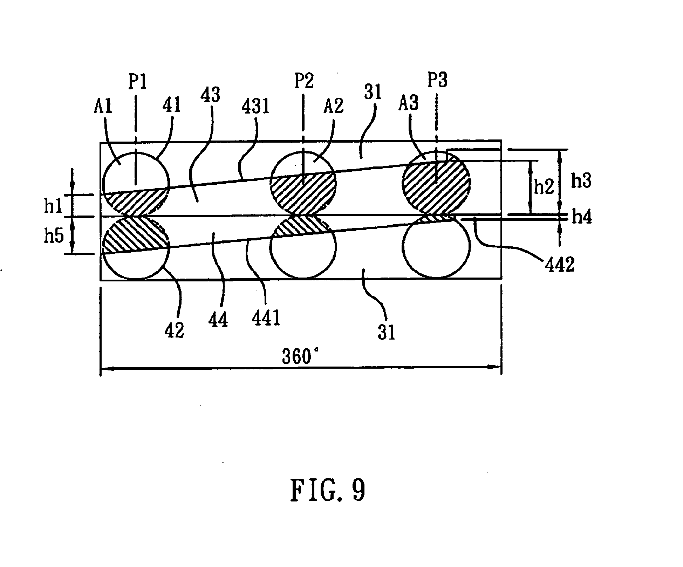

The first shield 43 extends from a top end of the second peripheral rim 34 as shown as a first imaginary line in Fig. 8, and an upper zone of a first imaginary line is the first shield 43 with a spiral top edge 431 so that an axial height of the first shield 43 changes around a circumferential direction. If the first shield 43 is expanded onto a plane as shown in Fig. 9, a first axial height h1 is formed on a certain circumferential position, and when displacing rightward around a predetermined circumferential direction from the first axial height h1, the axial height h1 becomes increased until a stepped portion where a second axial height h2 and a third axial height h3 are formed, and the third axial height h3 displaces a certain circumferential distance with the same circumferential direction until the third axial height h3 connects with the first axial height h1, thereby forming a 360 degree of annular rim.

The first shield 43 serves to close the first pore 41 as shown in Fig. 9, and a bottom side of the first pore 41 and a bottom side of the first shield 43 are located at the same axial height so that when a center of the first pore 41 is located at a first circumferential position P1, the cross sectional area of the first pore 41 closed by the first shield 43 becomes smallest, and a first cross sectional area A1 of the first pore 41 to flow the hot water becomes largest, such that the hot water from the first external chamber 301 flows into the first internal chamber 303 at the largest amount to enhance a mixed rate of the hot water. When the center of the first pore 41 is located at a second and a third circumferential positions P2 and P3, a second and a third cross sectional areas A2, A3 to flow hot water become decreased or the second and the third cross sectional areas A2, A3 are shielded completely without flowing water. In this embodiment, the first pore 41 changes along the circumferential direction by rotating the valve core 30b so that a top end of the second peripheral rim 34 integrally couples with the first shield 43 to rotate in relation to the first pore 41.

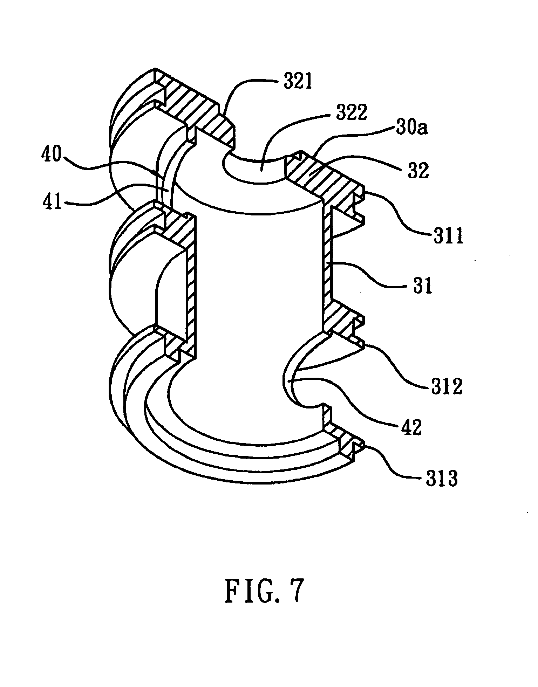

The second shield 44 extends along a bottom end of the second peripheral rim 34 as illustrated in Fig. 7, and on a connection of the second peripheral rim 34 and the second shield 44 is formed a second imaginary line, wherein a lower zone of the second imaginary line is the second shield 44 with a spiral bottom edge 441 so that an axial height of the first shield 44 changes around the circumferential direction. If the second shield 44 is expanded onto a plane as illustrated in Fig. 9, a fourth axial height h4 is formed on a certain circumferential position, and when displacing leftward around a predetermined circumferential direction from the fourth axial height h4, the axial height h4 becomes increased until a fifth axial height h5 becomes largest to obtain a border of the second shield 44, and the second shield 44 includes a cutout 442 extending around a circumferential side thereof, two sides of the cutout 442 communicate with two borders of the second shield 44.

The second shield 44 is used to close the second pore 42 properly, and a closing structure and operation are the same as these of the first shield 43, thus further remarks are omitted. It is to be noted that when the valve core 30b rotates with the first and the second shields 43, 44 in the circumferential direction, the cross sectional area of the first pore 41 to flow hot water becomes decreased, and the cross sectional area of the second pore 42 to flow cold water becomes increased, e.g., an inverse relationship exists between the cross sectional area of the first pore 41 to flow the hot water and the cross sectional area of the second pore 42 to flow the cold water, and when the valve core 30b rotates toward another circumferential direction, the cross sectional area of the first pore 41 to flow the hot water becomes increased, and the cross sectional area of the second pore 42 to flow the cold water becomes decreased, but the inverse relationship between the cross sectional area of the first pore 41 to flow the hot water and the cross sectional area of the second pore 42 to flow the cold water remains unchanged.

Furthermore, when an axial height of the second shield 44 is at the highest position, the second pore 42 is not closed completely to supply cold water, but when an axial height of the first shield 43 is at the highest position, the second pore 42 is closed completely that can not supply hot water any more to comply with actual demand, wherein the second pore 42 is located at the cutout 442 of the second shield 44 to flow cold water at the largest amount.

The driving motor 50 as illustrated in Figs. 1, 4, and 5 is installed to the motor holder 213 of the upper housing 20b, an output shaft 51 is connected to the valve core 30b by ways of a coupling member 511 and two retaining elements 512 from the first end portion 351 of the centrally axial segment 35 of the upper housing 20b to actuate the valve core 30b to rotate.

The second peripheral rim 34 of the valve core 30b contacts with the first peripheral rim 31 of the casing 30a and rotates relative to the first peripheral rim 31 of the casing 30a, and the first peripheral rim 31 integrally extends to form the first and the second shields 43, 44, the first and the second shields 43, 44 contact with the first peripheral rim 31 of the casing 30a and rotate to achieve a closing effect.

An anti-torque value generating from the friction between the first shield 43, the second shield 44, the valve core 30b, and the casing 30a is less than 0.1N-M, therefore the driving motor 50 with a lower torque output can cooperate with the power requirement of the present invention to lower cost and size of the driving motor.

Thereby, the temperature controlling valve of the present invention can control the temperature of the mixed cold and hot water precisely, and the size of the driving motor 50 is lowered to decrease the size of the outlet valve seat 2 as well.

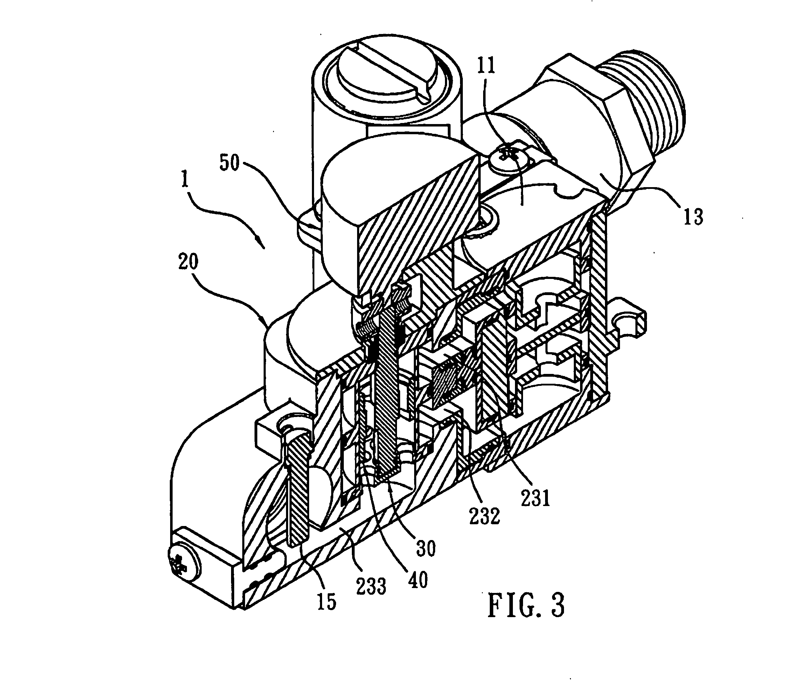

With reference to Figs. 3, 4, and 6, the hot and the cold waters flow into the first external chamber 301 and the second external chamber 302 respectively from the first tunnel 231 and the second tunnel 232 through the first pore 41 and the second pore 42, and further flow into the first internal chamber 303 and the second internal chamber 304, wherein the hot water in the first internal chamber 303 flows into the second internal chamber 304 from the second bores 361 of the isolating rim 36 to mix with the cold water, and then the mixed cold and hot water flows downward to the first passage 233 from the first bores 332 of the second end rim 33, finishing hot and cold water mixing process. Thereby, the driving motor 50 actuates the valve core 30b to rotate based on the temperature sensed by the temperature sensor 15 to adjust mixing rate of the cold and the hot waters freely. Because the valve core 30b is rotated to a predetermined direction, the cross sectional area of the first pore 41 to flow the hot water and the cross sectional area of the second pore 41 to flow the cold water are adjusted to control the mixed rate of the cold and the hot waters. Besides, the cold water is used as the mixed water completely according to actual demand.

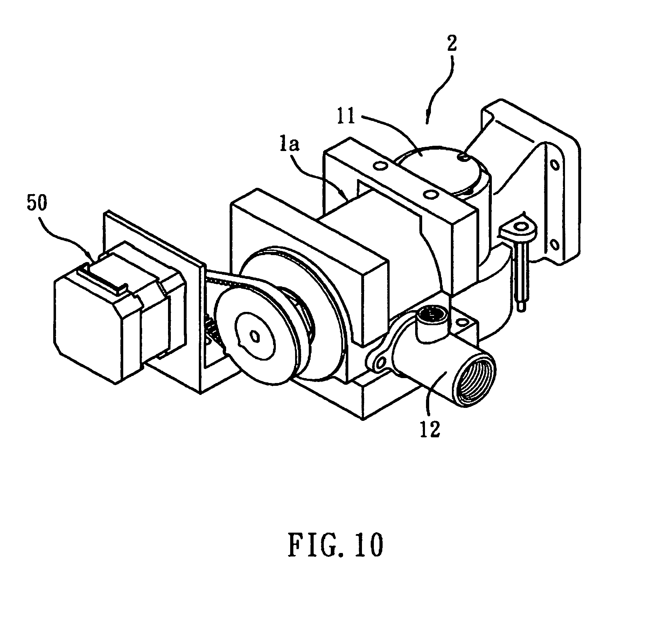

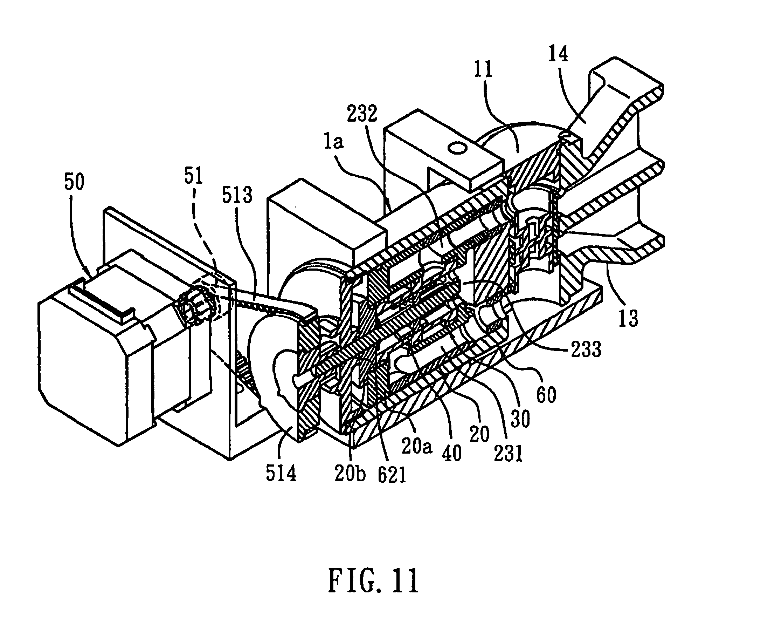

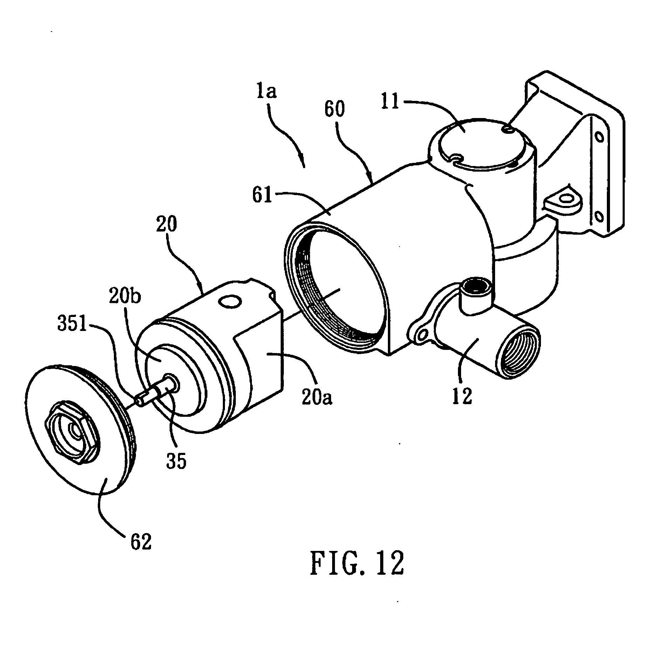

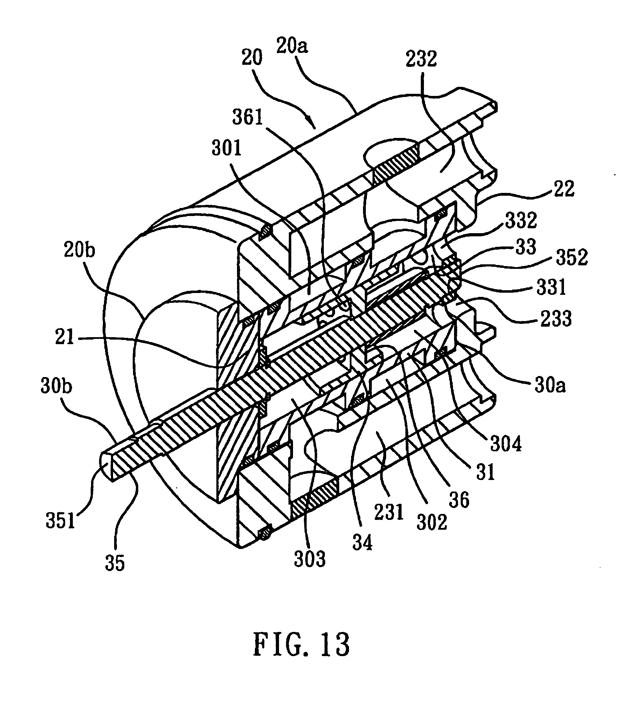

As illustrated in Figs. 10-12, a temperature controlling valve 1a according to a second embodiment of the present invention is installed to another type of outlet valve seat 2, and a different structure of the temperature controlling valve 1a from that of the temperature controlling valve 1 of the first embodiment includes:
a. The temperature controlling valve 1 of the first embodiment is installed vertically, therefore the centrally axial segment 35 of the valve core 30b extends vertically, and the driving motor 50 is actuated to rotate along a vertically axial line. But, the temperature controlling valve 1a of the second embodiment is installed horizontally, therefore the centrally axial segment 35 of the valve core 30b extends horizontally, and the driving motor 50 is actuated to rotate along a horizontally axial line.
b. The driving motor 50 of the first embodiment is connected with the first end portion 351 of the centrally axial segment 35 of the valve core 30b to be actuated to rotate by using the coupling member 511 and the retaining members 512. But the driving motor 50 of the second embodiment is coupled with a belt wheel 514 of the first end portion 351 of the valve core 30b to be actuated to rotate.
c. The temperature controlling valve 1 of the first embodiment connects with the base 20, the pressure balance valve 11, and the outlet piping 12. However, the temperature controlling valve 1a of the second embodiment further comprises a cover 60 covered thereon to receive a base 20, accordingly the base 20 is an independent component to be replaced removably, and the cover 60 includes a cylinder member 61 and a lid 62 screwed to one side of the cylinder member 61, and the lid 62 includes an abutting tab 621 formed on an inner side thereof to limit the upper housing 20b, so that the upper housing 20b is movably engaged to the body 20a without using the screw bolts 211. Due to the upper housing 20b engages with the body 20a tightly, the first end rim 32 of the first embodiment is not necessary in the second embodiment but is replaced by the first end wall 21. As shown in Figs. 11, 13, the first peripheral rim 31 includes an orifice attached on one end thereof opposite to the first end wall 21.
d. The first passage 233 of the first embodiment communicates with the peripheral wall 23 of the body 20a proximate to the second end wall 22; and a first passage 233 of the second embodiment communicates with a central portion of the second end wall 22 of the body 20a as illustrated in Figs. 11 and 13.
e. The second peripheral rim 34, the centrally axial segment 35, and the isolating rim 36 of the first embodiment are integrally formed, but the second peripheral rim 34 and the isolating rim 36 of the second embodiment are worked independently, the centrally axial segment 35 of the second embodiment is formed independently from the second peripheral rim 34 and the isolating rim 36, and the second peripheral rim 34, the centrally axial segment 35, and the isolating rim 36 of the second embodiment are assembled together easily by using the stepped rim and the limiting element. In addition, the second end rim 33 of the casing 30a of the first embodiment is comprised of a disc component, and the fixing segment 331 is a closed component. A second end rim 33 of the second embodiment is integrally formed with the casing 30a, and includes an open fixing segment 331 disposed thereon so as to insert the second end portion 352 of the centrally axial segment 35 to be retained.

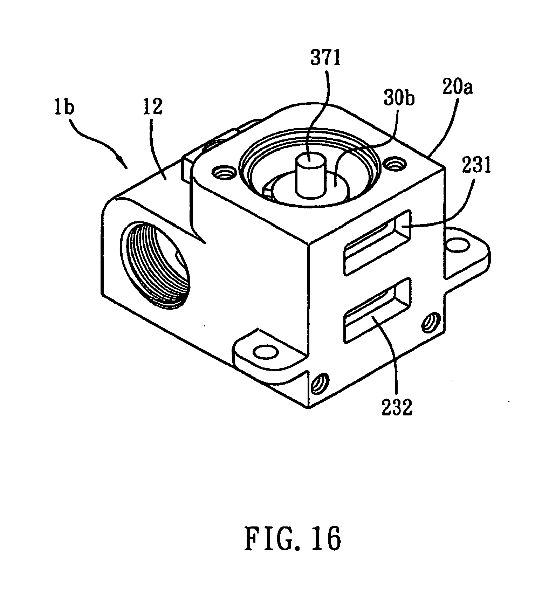

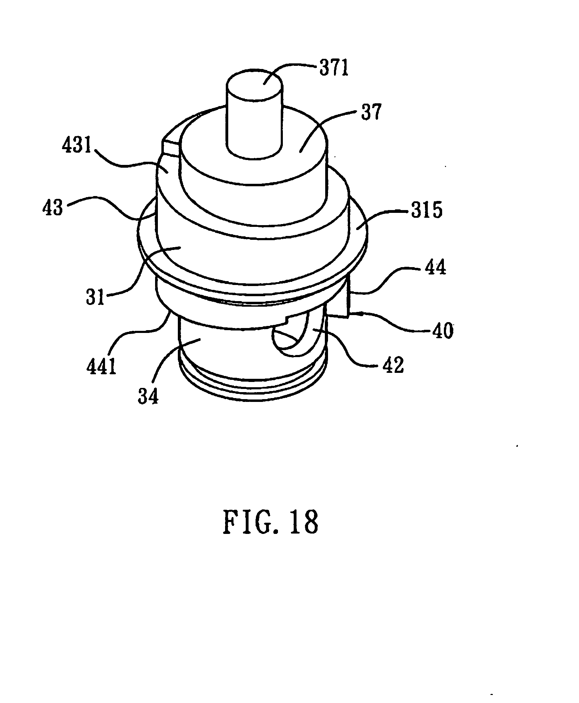

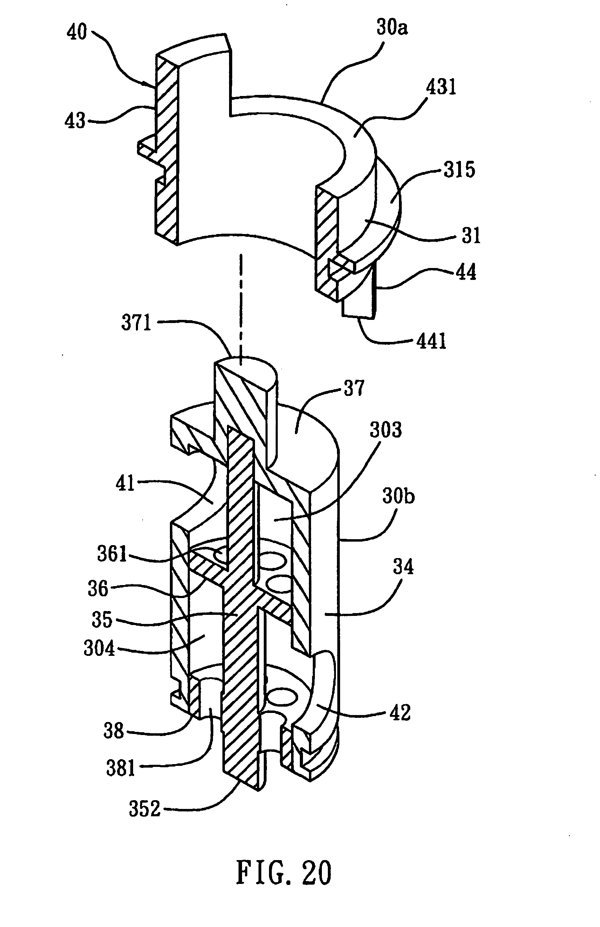

With reference to Figs. 16-20, a different structure of a temperature controlling valve 1b of a third embodiment from that of the first embodiment includes:
a. The first pore 41 and the second pore 42 of the water supplying means 40 of the first embodiment are fixed to the first peripheral rim 31 of the casing 30a of the temperature control set 30, and the first shield 43 and the second shield 44 are mounted to the top and the bottom ends of the second peripheral rim 34 of the valve core 31. A first pore 41 and a second pore 42 of the second embodiment are fixed to the second peripheral rim 34 of the valve core 30b, the first shield 43 and the second shield 44 of the second embodiment are mounted to the first peripheral rim 31 of the casing 30a.
b. The first peripheral rim 31 of the casing 30a of the second embodiment includes the first shield 43 and the second shield 44 integrally extending from the top and the bottom ends thereof without the first and the second end rims 32, 33 and the first and the third projected walls 311, 313 of the first embodiment. Moreover, the first peripheral rim 31 of the casing 30a includes an engaging periphery 315 disposed thereon adjacent to the second projected wall 312, and the receiving groove 201 of the base 20 includes a stepped periphery 238 formed therein to retain the engaging periphery 315.
   The valve core 30b includes a first pore 41 and a second pore 42 disposed on two symmetrical positions of the second peripheral rim 34 opposite to the first shield 43 and the second shield 44 of the casing 30a, and the second peripheral rim 34 includes a third end rim 37 mounted on a top end thereof and a fourth end rim 38 secured on a bottom end thereof, the fourth end rim 38 includes a plurality of third bores 381 arranged thereon to communicate with the first passage 233.
   The third end rim 37 includes a connecting axial section 371 integrally extending from a center of a top end thereof to be driven by the driving motor 50 and to replace the first end portion 351 of the centrally axial segment 35 so that the first end portion 351 connects with a bottom end of the third end rim 37 without extending outward, and a bottom end of the first end portion 351 couples with the fourth end rim 38, and the fourth end rim 38 includes a second end portion 352 extending from a center of the bottom surface thereof. The second peripheral rim 34, the third end rim 37, and the connecting axial section 371 of the third embodiment are integrally formed, and the centrally axial segment 35, the isolating rim 36, and the fourth end rim 38 of the third embodiment are integrally formed. Furthermore, the second peripheral rim 34 includes a fourth seal ring 341 retained thereon to engages with the first hole 237 of the body 20a.
c. A first external chamber 301 of the third embodiment includes the receiving groove 201, the first peripheral rim 31, the centrally axial segment 35, the second peripheral rim 34, and the third end rim 37 defined therein; the second external chamber 302 of the third embodiment includes the receiving groove 201, the first seal ring 341 of the first peripheral rim 31, and the fourth seal ring 341 of the second peripheral rim 34 defined therein. The first internal chamber 303 includes the second peripheral rim 34, the centrally axial segment 35, the isolating rim 36, and the third end rim 37 defined therein; the second internal chamber 304 includes the second peripheral rim 34, the centrally axial segment 35, and the fourth end rim 38 defined therein.

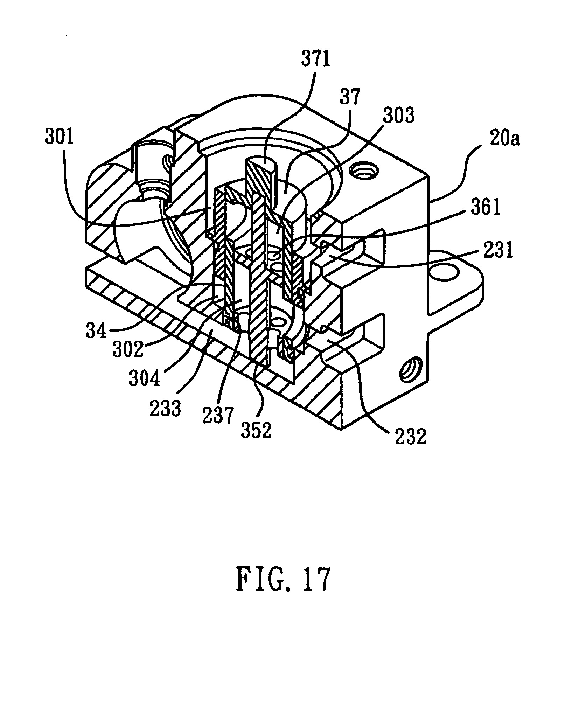

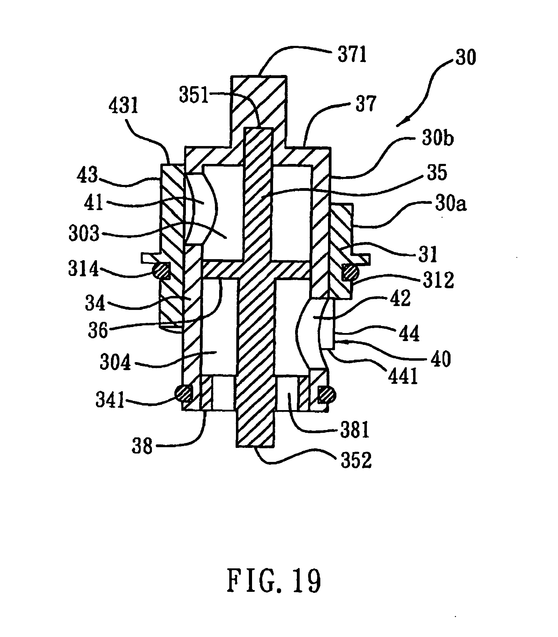

Referring to Figs. 17 and 19, the hot and the cold waters flow into the first and the second external chambers 301, 302 form the first and the second tunnels 231, 232 respectively, and then flow into the first and the second internal chambers 303, 304 through the first and the second pores 41, 42 individually, wherein the hot water in the first internal chamber 303 further flows to the second internal chamber 304 to mix with the cold water via the second bores 361, and the driving motor 50 is applied to actuate the valve core 30b to rotate for adjusting a mixed rate of the cold and the hot waters, thus adjusting the temperature of the mixed cold and the hot waters.

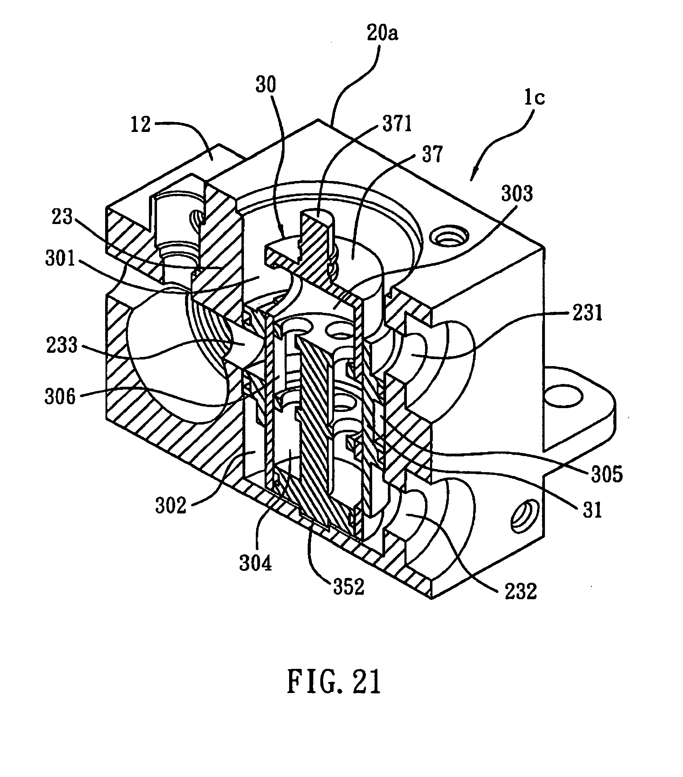

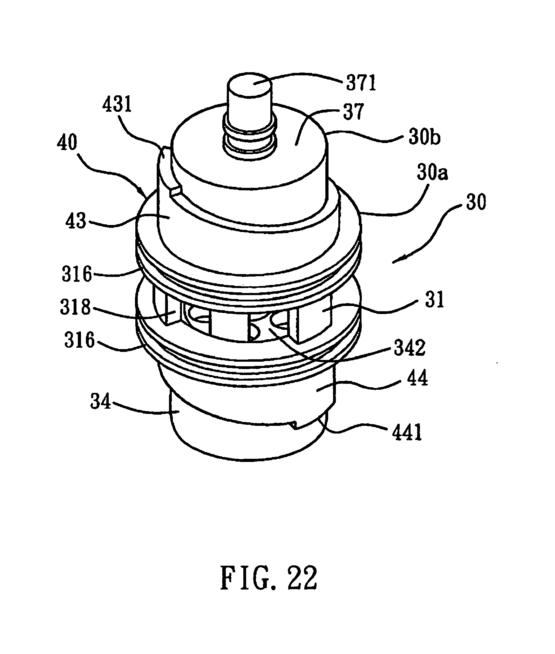

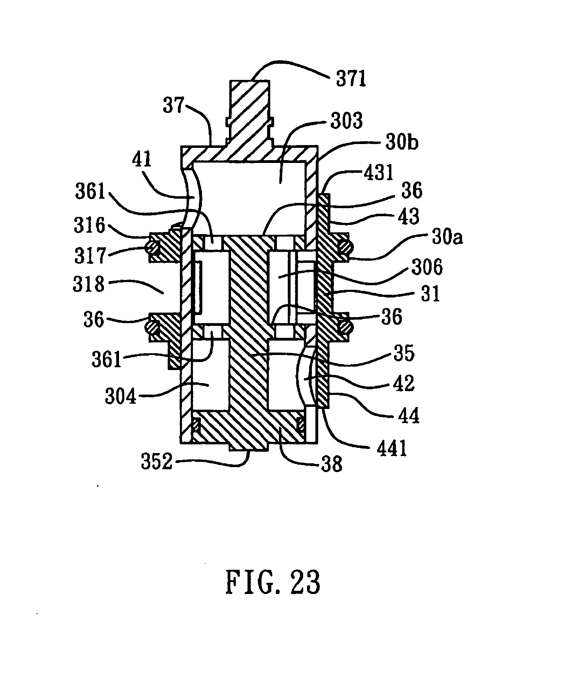

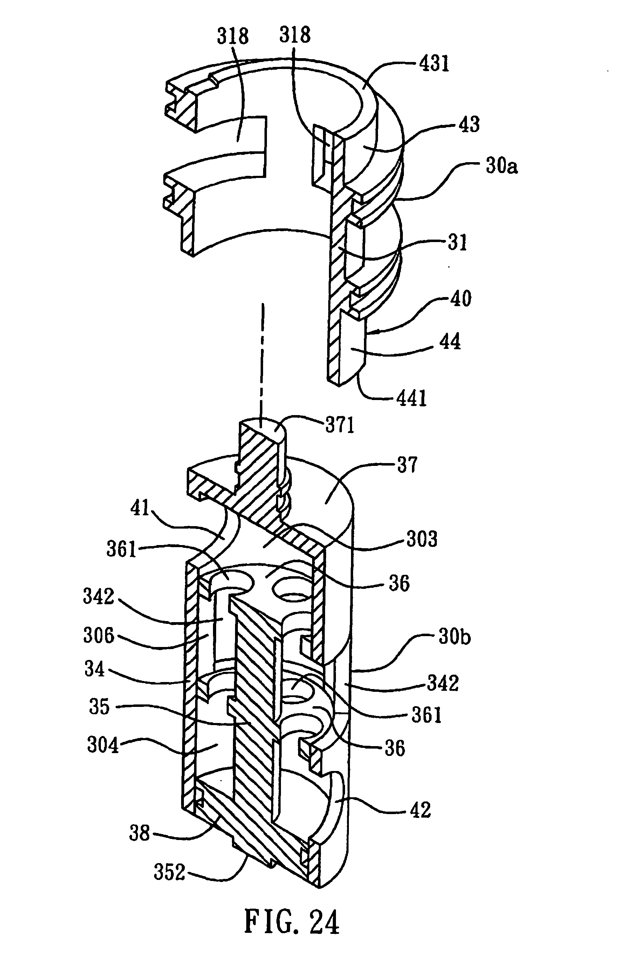

As shown in Figs. 21-24, a different structure of a temperature controlling valve 1b of a fourth embodiment from that of the first embodiment includes:
a. The first passages 233 of the first, the second, and the third embodiment are connected to the peripheral wall 23 of the body 20a adjacent to the second end wall 22. A first passages 233 of the fourth embodiment is coupled to a central section of the peripheral wall 23 of the body 20a between the first and the second external chambers 301, 302, but is separated apart from the first and the second external chambers 301, 302.
b. Besides, between the first and the second external chambers 301, 302 of the fourth embodiment is defined a third external chamber 305 to receive mixed cold and hot waters, and between the first and the second internal chambers 303, 304 is defined a third internal chamber 306 to receive the mixed cold and hot water so that the hot water from the first internal chamber 303 and the cold water from the second internal chamber 304 flow into the third internal chamber 306 to be mixed together, and then flow out of the first passage 233 through the third external chamber 305. The first peripheral rim 31 of the casing 30a of the fourth embodiment includes two annular projections 316 disposed on an outer surface thereof to space a determined axial distance apart from each other, and the annular projection 316 includes a fifth seal ring 317 mounted thereon to engage with the peripheral wall 23 of the body 20a so that between the first peripheral rim 31 of the casing 30a and the receiving groove 201 of the base 20 is defined the third external chamber 305 by ways of the fifth seal rings 317 of the annular projections 316 to space the first and the second external chambers 301, 302 apart from each other.

The centrally axial segment 35 of the valve core 30b includes two isolating rims 36 radially extending from an outer surface thereof and separating a predetermined axial distance apart so as to define the third internal chamber 306 between the isolating rims 36. The first peripheral rim 31 of the casing 30a includes a plurality of first ventilations 318 arranged thereon relative to the third external chamber 305, and the second peripheral rim 34 of the valve core 30b includes a number of second ventilations 342 attached thereon relative to the third internal chamber 306, such that the third external chamber 305 and the third internal chamber 306 are communication with each other, and the hot water in the first internal chamber 303 and the cold water in the second internal chamber 304 flow into the third internal chamber 306 to be mixed together via the second bores 361 of the isolating rim 36, and then the mixed water in the third internal chamber 306 flows into the third external chamber 305 through the second ventilations 342 and the first ventilations 318, and then flows into the first passage 233. It is to be noted that the fourth end rim 38 of the fourth embodiment is closed without providing the third bores 381 of the third embodiment thereon.

Moreover, the valve core 30b, the centrally axial segment 35, the isolating rims 36, and the fourth end rim 38 are an integral component, and the first end portion 351 of the centrally axial segment 35 is in connected with the isolating rim 36 without coupling with the third end rim 37, the second end portion 352 axially retains with the second end wall 22 of the body 20a.

While we have shown and described various embodiments in accordance with the present invention, it is clear to those skilled in the art that further embodiments may be made without departing from the scope of the present invention.

## Claims

1. A temperature controlling valve comprising
a base (20) including a first end wall (21), a second end wall, (22) and a peripheral wall (23), among the first end wall, the second end wall, and the peripheral wall being defined a receiving groove (201), the peripheral wall having a first tunnel (231) for flow of hot water and a second tunnel (232) for flow of cold water at two different axial positions respectively said tunnels communicating with the receiving groove, the peripheral wall further including a first passage 233 arranged on one side thereof proximate to the second end wall so as to communicate with the receiving groove;
a temperature control set (30) installed in the receiving groove of the base, between the temperature control set and the receiving groove being defined a first external chamber (301) to receive the hot water and to communicate with the first tunnel, and a second external chamber (302) to receive the cold water and to communicate with the second tunnel; the temperature control set including a first internal chamber (303) to receive the hot water and a second internal chamber (304) to receive the cold water, both of which are in communication with the first passage; the temperature control set further including a casing (30a) and a valve core (30b) movably contacting with the casing to be driven to rotate ;
a water supplying means (40) provided in the casing and the valve core of the temperature control set, and including a first pore (41) to flow the hot water and to communicate the first external chamber with the first internal chamber, including a second pore (42) to flow the cold water and to communicate the second external chamber with the second internal chamber, including a first shield (43) to close the first pore, and including a second shield (44) to close the second pore; a part of the first pore which is not closed by the first shield defining a cross sectional area to flow the hot water, and a part of the second pore which is not closed by the second shield defining a cross sectional area to flow the cold water; the cross sectional area of the first pore to flow the not water and the cross sectional area of the second pore to flow the cold water are relatively increased or decreased with the rotation of the valve core (30b) in the casing (30a).

2. The temperature controlling valve as claimed in claim 1, wherein the first external chamber (301) and the second external chamber (302) are defined by a first peripheral rim (31) of the casing (30a) and a peripheral wall (23) of the base (20); one part of the first internal chamber (303) and the second internal chamber (304) is defined by the first peripheral rim of the casing and the valve core; the first pore (41) and the second pore (42) of the water supplying means (40) are fixed at two different axial positions on the peripheral rim (31) of the casing (30a) individually, and the first and the second shields (43,44) are arranged on a top and a bottom side of a second peripheral rim (34) of the valve core (30b) respectively; the first and the second shields contact with the first peripheral rim of the casing, and axial widths of the first and the second shields become increased or decreased with changing circumferential position.

3. The temperature controlling valve as claimed in claim 2, wherein the peripheral wall (23) of the base (20) communicates with the first passage (233), the first peripheral of the casing (30a) includes a first end rim (32) integrally connected onto a top end thereof, and includes a second end rim (33) arranged on a bottom end thereof; the first end rim (32) is opposite to the first end wall (21) of the base (20) to define a part of the first internal chamber (303), and includes an aperture (322) disposed thereon; the second end rim is opposite to the second end wall of the base to define a part of the second internal chamber, and includes a fixing segment (331) disposed thereon and a plurality of first bores (332) arranged around the fixing segment; the valve core (30b) includes a centrally axial segment (35) extending along the second peripheral rim (34), and an isolating rim (36) integrally connecting with the second peripheral rim and the centrally axial segment; the centrally axial segment includes a first end portion (351) and a second end portion (352); the first end portion extends outward through the aperture (322) of the casing and first end wall (21) of the base (20) to be driven to rotate; the second end portion (352) axially retains with the fixing segment (331) of the casing; the isolating rim (36) is used to separate the first internal chamber (303) from the second internal chamber (304), and includes a plurality of second bores (361) arranged thereon to communicate the first internal chamber (303) with the second internal chamber (304), the second internal chamber (304) communicates with the first passage (233) by using the first bores (332) of the second end rim of the casing.

4. The temperature controlling valve as claimed in claim 2, wherein the first peripheral rim (31) includes a first projected wall (311), a second projected wall (312), and a third projected wall (313) radially extending therefrom respectively, and the first, the second, and the third projected walls individually include a first seal ring (314) retained thereon to engage with the peripheral wall of the base so that between the first seal of the first projected wall and the first seal ring of the second projected wall is defined the first external chamber (301) and between the first seal ring of the second projected wall and the first seal ring of the third projected wall is defined the second external chamber (302).

5. The temperature controlling valve as claimed in claim 1, wherein the base (20) further includes a body (20a) and an upper housing (20b), the body includes the peripheral wall and the second end wall of the base formed therein, and the upper housing is fixed to an opening attached on a top end of the body so as to form the first end wall of the base, and the valve core extends out of the upper housing to be driven to rotate.

6. The temperature controlling valve as claimed in claim 5, wherein the upper housing includes a motor holde (213) to receive a driving motor (50) so that a part of the valve core extending out of the upper housing is driven by the driving motor.

7. The temperature controlling valve as claimed in claim 1 further comprising a cover (60), and the cover includes a cylinder member (61) and a lid (62) screwed to one side of the cylinder member; the base is received in the cover; and the base includes a body and a upper housing; the body includes the peripheral wall and the second end wall of the base formed therein, and the upper housing includes the second end wall of the base defined therein, the upper housing is movably engaged to the body and is retained by the lid; the valve core extends out of the upper housing and the lid to be driven to rotate.

8. The temperature controlling valve as claimed in claim 1 further comprising a driving motor (50) to drive the valve core (30b) of the temperature control set (30).

9. The temperature controlling valve as claimed in claim 2, wherein the second end wall (22) of the base includes the first passage/communicating thereon; the first peripheral rim (31) of the casing (30a) includes an orifice attached on one end thereof opposite to the first end wall of the base so that the first end wall of the base defines a part of the first internal chamber, and another end of the peripheral wall connects with a second end wall of the base to define a part of the second internal chamber;
the second end rim (33) of the casing includes a fixing segment (331) disposed thereon and a plurality of first bores arranged around the fixing segment; the valve core includes a centrally axial segment extending along the first peripheral rim, and an isolating rim connecting between the first peripheral rim and the centrally axial segment; the centrally axial segment includes a first end portion and a second end portion; the first end portion extends out of the first end wall of the base to be driven to rotate; the second end portion axially retains with the fixing segment of the casing; the isolating rim is used to separate the first internal chamber (303) from the second internal chamber (304), and includes a plurality of second bores arranged thereon to communicate the first internal chamber with the second internal chamber, the second internal chamber communicates with the first passage by using the first bores of the second end rim of the casing.

10. The temperature controlling valve as claimed in claim 1, wherein the
first external chamber (301) and the second external chamber (302) are defined by the receiving groove of the base and the first peripheral rim of the casing, and the valve core; the first internal chamber (303) and the second internal chamber (304) are defined in the valve core; the first pore and the second pore of the water supplying means are fixed at two different axial positions of the second peripheral rim of the valve core individually, and the first shield extends from a top end of the first peripheral rim of the casing, the second shield extends along a bottom end of the first peripheral rim of the casing; the first and the second shields contact with the second peripheral rim of the valve core, and axial widths of the first and the second shields become increased or decreased with changing circumferential position.

11. The temperature controlling valve as claimed in claim 10, wherein the peripheral wall of the base communicates with the first passage, the second peripheral rim (34) of the valve core includes a third end rim (37), a fourth end rim (38), and an isolating rim (310) arranged on two ends and a middle portion thereof respectively; the third end rim is opposite to the first end wall of the base and used to define the first internal chamber with the isolating rim and the second peripheral rim of the valve core, and the first pore is fixed on the second peripheral rim of the valve core relative to the first internal chamber; the fourth end rim is opposite to a second end wall of the base to define the second internal chamber with the isolating rim and the second peripheral rim of the valve core, and the second pore is disposed on the second peripheral rim relative to the second internal chamber, and includes a plurality of third bores arranged thereon to communicate with the first passage which is communication with the second internal chamber and the base; the isolating rim includes a plurality of second bores arranged thereon to communicate the first internal chamber with the second internal chamber.

12. The temperature controlling valve as claimed in claim 11, wherein the valve core further includes a centrally axial segment (35) and a connecting axial section (371), the isolating rim and the fourth end rim radially extend from the centrally axial segment; the centrally axial segment includes a first end portion (351) and a second end portion (352), and the first end portion connects with the first end rim of the valve core, and the second end portion axially retains with the second end wall of the base; the connecting axial section integrally extends from a center of a top end of the third end rim to extend out of the first end wall of the base to be driven by the driving motor.

13. The temperature controlling valve as claimed in claim 11, wherein the first peripheral rim (31) of the casing includes a first seal rim (314) retained thereon to engage with the peripheral wall of the base, and the first peripheral rim of the casing includes an engaging periphery disposed thereon adjacent to the first seal ring to retain with a stepped periphery formed on the peripheral wall of the base; the peripheral wall of the base adjacent to second end wall includes a first hole disposed thereon to communicate with the first passage; the second peripheral rim (34) of the valve core includes a fourth seal ring (341) retained thereon to engages with the first hole of the base; the first external chamber is located between the first end wall of the base and the first seal ring of the casing; the second external chamber is located at the first seal ring of the casing and the fourth seal ring of the valve core.

14. The temperature controlling valve as claimed in claim 10, wherein the peripheral wall of the base includes the first passage coupled to a central section thereof; the first peripheral rim (31) of the casing includes two fifth seal rings (317) mounted thereon to engage with the peripheral wall of the base so that between the fifth seal rings of the first peripheral rim of the casing and the peripheral wall of the base is defined a third external chamber to communicate with the first passage, and the third external chamber is located between the first external chamber and the second external chamber, the first peripheral rim of the casing includes a plurality of first ventilations arranged thereon relative to the third external chamber (305), and the second peripheral rim of the valve core includes a third end rim (37) mounted on a top end thereof, a fourth end rim (38) secured on a bottom end thereof, and two isolating rims arranged thereon; the third end rim is relative to the first end wall of the base and used to define the first internal chamber with the second peripheral rim and the isolating rim, and the first pore is disposed on the second peripheral rim relative to the first internal chamber; the fourth end rim is opposite to the second end wall of the base and used to define the second internal chamber with the isolating rim and the second peripheral rim, and a second pore is disposed on the second peripheral rim opposite to the second internal chamber; between the isolating rims and the second peripheral rim is defined a third internal chamber (306), and the isolating rim includes a plurality of second bores arranged thereon to communicate the first internal chamber with the second internal chamber; the second peripheral rim of the valve core includes a number of second ventilations attached thereon relative to the third internal chamber so as to communicate with the first ventilations of the casing so that the third internal chamber communicates with the third external chamber.

15. The temperature controlling valve as claimed in claim 14, wherein the valve core further includes a centrally axial segment (35) and a connecting axial section (371), the isolating rims and the fourth end rim radially extends from the centrally axial segment; and the centrally axial segment includes a first end portion (351) and a second end portion (352), the first end portion connects with a bottom end of the third end rim, and a bottom end of the first end portion couples with the fourth end rim, the fourth end rim includes the second end portion extending from a center of the bottom surface thereof; the connecting axial section integrally extending from a center of a top end of the third end rim to be driven by the driving motor.

16. The temperature controlling valve as claimed in claim 14, wherein the first peripheral rim (31) of the casing includes an engaging periphery (315) disposed thereon, and the peripheral wall of the base includes a stepped periphery (238) formed therein to retain the engaging periphery.

## Patentansprüche

1. Temperatursteuerungsventil, umfassend eine Basis (20), die eine erste Endwand (21), eine zweite Endwand (22) und eine periphere Wand (23) aufweist; wobei zwischen der ersten Endwand, der zweiten Endwand und der peripheren Wand eine Aufnahmenut (201) definiert ist, die periphere Wand einen ersten Kanal (231) für einen Strom von heißem Wasser und einen zweiten Kanal (232) für einen Strom von kaltem Wasser an jeweils zwei unterschiedlichen axialen Positionen aufweist, wobei die Kanäle mit der Aufnahmenut in Verbindung stehen, die periphere Wand ferner einen ersten Durchgang (233) aufweist, der an einer Seite davon nahe der zweiten Endwand angeordnet ist, um mit der Aufnahmenut in Verbindung zu stehen;
einen Temperatursteuersatz (30), der in der Aufnahmenut der Basis installiert ist, wobei zwischen dem Temperatursteuersatz und der Aufnahmenut eine erste äußere Kammer (301) definiert ist, um das heiße Wasser aufzunehmen und mit dem ersten Kanal in Verbindung zu stehen, und eine zweite äußere Kammer (302), um das kalte Wasser aufzunehmen und mit dem zweiten Kanal in Verbindung zu stehen; wobei der Temperatursteuersatz eine erste innere Kammer (303) aufweist, um das heiße Wasser aufzunehmen, und eine zweite innere Kammer (304), um das kalte Wasser aufzunehmen, von denen beide mit dem ersten Durchgang in Verbindung stehen; wobei der Temperatursteuersatz ferner ein Gehäuse (30a) und einen Ventileinsatz (30b) aufweist, der das Gehäuse beweglich berührt, um zum Drehen angetrieben zu werden;
ein Wasserzufuhrmittel (49), das in dem Gehäuse und dem Ventileinsatz des Temperatursteuersatzes vorgesehen ist und eine erste Pore (41) aufweist, um das heiße Wasser fließen zu lassen und die erste äußere Kammer mit der ersten inneren Kammer in Verbindung zu bringen, eine zweite Pore (42) aufweist, um das kalte Wasser fließen zu lassen und die zweite äußere Kammer mit der zweiten inneren Kammer in Verbindung zu bringen, einen ersten Schutz (43) zum Schließen der ersten Pore aufweist und einen zweiten Schutz (44) zum Schließen der zweiten Pore aufweist; wobei ein Teil der ersten Pore, der nicht von dem ersten Schutz verschlossen ist, eine Querschnittsfläche definiert, um das heiße Wasser fließen zu lassen, und ein Teil der zweiten Pore, der nicht von dem zweiten Schutz verschlossen ist, eine Querschnittsfläche definiert, um das kalte Wasser fließen zu lassen; die Querschnittsfläche der ersten Pore zum Fließenlassen des heißen Wassers und die Querschnittsfläche der zweiten Pore zum Fließenlassen des kalten Wassers werden mit der Drehung des Ventileinsatzes (30b) im Gehäuse (30a) relativ vergrößert oder verkleinert.

2. Temperatursteuerungsventil nach Anspruch 1, wobei die erste äußere Kammer (301) und die zweite äußere Kammer (302) durch einen ersten peripheren Rand (31) des Gehäuses (30a) und eine periphere Wand (23) der Basis (20) definiert sind; ein Teil der ersten inneren Kammer (303) und der zweiten inneren Kammer (304) durch den ersten peripheren Rand des Gehäuses und den Ventileinsatz definiert ist; die erste Pore (41) und die zweite Pore (42) des Wasserzufuhrmittels (40) an zwei unterschiedlichen axialen Positionen an dem peripheren Rand (31) des Gehäuses (30a) einzeln befestigt sind, und der erste und der zweite Schutz (43, 44) an einer Ober- beziehungsweise einer Unterseite eines zweiten peripheren Rands (34) des Ventileinsatzes (30b) angeordnet sind; der erste und der zweite Schutz den ersten peripheren Rand des Gehäuses berühren, und die axiale Breite des ersten und des zweiten Schutzes mit der sich ändernden Umfangsposition größer oder kleiner wird.

3. Temperatursteuerungsventil nach Anspruch 2, wobei die periphere Wand (23) der Basis (20) mit dem ersten Durchgang (233) in Verbindung steht, der erste periphere Rand (31) des Gehäuses (30a) einen ersten Endrand (32) aufweist, der einteilig an einem oberen Ende davon verbunden ist, und einen zweiten Endrand (33) aufweist, der an einem unteren Ende davon angeordnet ist; der erste Endrand (32) der ersten Endwand (21) der Basis (20) gegenüberliegt, um einen Teil der ersten inneren Kammer (303) zu definieren, und eine Öffnung (322) aufweist, die daran angeordnet ist; der zweite Endrand der zweiten Endwand der Basis gegenüberliegt, um einen Teil der zweiten inneren Kammer zu definieren und einen Befestigungsabschnitt (331) aufweist, der daran angeordnet ist, und eine Vielzahl von ersten Bohrungen (332), die um den Befestigungsabschnitt herum angeordnet sind; der Ventileinsatz (30b) einen mittig axialen Abschnitt (35) aufweist, der entlang des zweiten peripheren Rands (34) verläuft, und einen Isolierrand (36), der sich einteilig mit dem zweiten peripheren Rand und dem mittig axialen Abschnitt verbindet; der mittig axiale Abschnitt einen ersten Endabschnitt (351) und einen zweiten Endabschnitt (352) aufweist; der erste Endabschnitt (351) durch die Öffnung (322) des Gehäuses und die erste Endwand (21) der Basis (20) nach außen ragt, um zum Drehen angetrieben zu werden; der zweite Endabschnitt (352) axial mit dem Befestigungsabschnitt (331) des Gehäuses hält; der Isolierrand (36) zum Trennen der ersten inneren Kammer (303) von der zweiten inneren Kammer (304) verwendet wird und eine Vielzahl von zweiten Bohrungen (361) aufweist, die daran angeordnet sind, um die erste innere Kammer (303) mit der zweiten inneren Kammer (304) in Verbindung zu bringen, die zweite innere Kammer (304) durch Verwendung der ersten Bohrungen (332) des zweiten Endrands des Gehäuses mit dem ersten Durchgang (233) in Verbindung steht.

4. Temperatursteuerungsventil nach Anspruch 2, wobei der erste periphere Rand (31) eine erste vorspringende Wand (311), eine zweite vorspringende Wand (312) und eine dritte vorspringende Wand (313) aufweist, die jeweils radial davon aus verlaufen, und die erste, die zweite und die dritte vorspringende Wand einzeln einen ersten Dichtring (314) aufweisen, der daran gehalten ist, um die periphere Wand der Basis zu berühren, sodass zwischen der ersten Dichtung der ersten vorspringenden Wand und dem ersten Dichtring der zweiten vorspringenden Wand die erste äußere Kammer (301) definiert ist und zwischen dem ersten Dichtring der zweiten vorspringenden Wand und dem ersten Dichtring der dritten vorspringenden Wand die zweite äußere Kammer (302) definiert ist.

5. Temperatursteuerungsventil nach Anspruch 1, wobei die Basis (20) ferner einen Körper (20a) und ein oberes Gehäuse (20b) aufweist, der Körper die periphere Wand und die zweite Endwand der Basis aufweist, die darin geformt sind, und das obere Gehäuse an einer Öffnung befestigt ist, die an einem oberen Ende des Körpers angebracht ist, um die erste Endwand der Basis zu bilden, und der Ventileinsatz aus dem oberen Gehäuse ragt, um zum Drehen angetrieben zu werden.

6. Temperatursteuerungsventil nach Anspruch 5, wobei das obere Gehäuse eine Motorhalterung (213) zum Aufnehmen eines Antriebsmotors (50) aufweist, sodass ein Teil des Ventileinsatzes, der aus dem oberen Gehäuse ragt, von dem Antriebsmotor angetrieben wird.

7. Temperatursteuerungsventil nach Anspruch 1, ferner umfassend eine Umhüllung (60), und die Umhüllung weist ein Zylinderelement (61) und einen Deckel (62) auf, der an einer Seite des Zylinderelements angeschraubt ist; die Basis ist in der Umhüllung aufgenommen und die Basis weist einen Körper und ein oberes Gehäuse auf; der Körper weist die periphere Wand und die zweite Endwand der Basis auf, die darin geformt sind, und das obere Gehäuse weist die zweite Endwand der Basis auf, die darin definiert ist, das obere Gehäuse greift beweglich in den Körper ein und wird von dem Deckel gehalten; der Ventileinsatz ragt aus dem oberen Gehäuse und der Klappe, um zum Drehen angetrieben zu werden.

8. Temperatursteuerungsventil nach Anspruch 1, ferner umfassend einen Antriebsmotor (50) zum Antreiben des Ventileinsatzes (30b) des Temperatursteuersatzes (30).

9. Temperatursteuerungsventil nach Anspruch 2, wobei die zweite Endwand (22) der Basis den ersten Durchgang (233) aufweist, der daran in Verbindung steht; der erste periphere Rand (31) des Gehäuses (30a) eine Öffnung aufweist, die an einem Ende davon gegenüber der ersten Endwand der Basis befestigt ist, sodass die erste Endwand der Basis einen Teil der ersten inneren Kammer definiert, und sich ein anderes Ende der peripheren Wand mit einer zweiten Endwand der Basis verbindet, um einen Teil der zweiten inneren Kammer zu definieren; der zweite Endrand (33) des Gehäuses einen Befestigungsabschnitt (331) aufweist, der daran angeordnet ist, und eine Vielzahl von ersten Bohrungen, die um den Befestigungsabschnitt herum angeordnet sind; der Ventileinsatz einen mittig axialen Abschnitt aufweist, der entlang des ersten peripheren Rands verläuft, und einen Isolierrand, der sich zwischen dem ersten peripheren Rand und dem mittig axialen Abschnitt verbindet; der mittig axiale Abschnitt einen ersten Endabschnitt und einen zweiten Endabschnitt aufweist; der erste Endabschnitt aus der ersten Endwand der Basis ragt, um zum Drehen angetrieben zu werden; der zweite Endabschnitt axial mit dem Befestigungsabschnitt des Gehäuses hält; der Isolierrand zum Trennen der ersten inneren Kammer (303) von der zweiten inneren Kammer (304) verwendet wird und eine Vielzahl von zweiten Bohrungen aufweist, die daran angeordnet sind, um die erste innere Kammer mit der zweiten inneren Kammer in Verbindung zu bringen, die zweite innere Kammer durch Verwendung der ersten Bohrungen des zweiten Endrands des Gehäuses mit dem ersten Durchgang in Verbindung steht.

10. Temperatursteuerungsventil nach Anspruch 1, wobei die erste äußere Kammer (301) und die zweite äußere Kammer (302) durch die Aufnahmenut der Basis und den ersten peripheren Rand des Gehäuses und den Ventileinsatz definiert sind; die erste innere Kammer (303) und die zweite innere Kammer (304) in dem Ventileinsatz definiert sind; die erste Pore und die zweite Pore des Wasserzufuhrmittels an zwei unterschiedlichen axialen Positionen des zweiten peripheren Rands des Ventileinsatzes einzeln befestigt sind, und der erste Schutz von einem oberen Ende des ersten peripheren Rands des Gehäuses aus verläuft, der zweite Schutz entlang eines unteren Endes des ersten peripheren Rands des Gehäuses verläuft; der erste und der zweite Schutz den zweiten peripheren Rand des Ventileinsatzes berühren, und die axiale Breite des ersten und des zweiten Schutzes mit der sich ändernden Umfangsposition größer oder kleiner wird.

11. Temperatursteuerungsventil nach Anspruch 10, wobei die periphere Wand der Basis mit dem ersten Durchgang in Verbindung steht, der zweite periphere Rand (34) des Ventileinsatzes einen dritten Endrand (37), einen vierten Endrand (38) und einen Isolierrand (36) aufweist, die an zwei Enden beziehungsweise einem mittleren Abschnitt davon angeordnet sind; der dritte Endrand der ersten Endwand der Basis gegenüberliegt und verwendet wird, um die erste innere Kammer mit dem Isolierrand und dem zweiten peripheren Rand des Ventileinsatzes zu definieren, und die erste Pore an dem zweiten peripheren Rand des Ventileinsatzes relativ zur ersten inneren Kammer befestigt ist; der vierte Endrand einer zweiten Endwand der Basis gegenüberliegt, um die zweite innere Kammer mit dem Isolierrand und dem zweiten peripheren Rand des Ventileinsatzes zu definieren, und die zweite Pore an dem zweiten peripheren Rand relativ zur zweiten inneren Kammer angeordnet ist, und eine Vielzahl von dritten Bohrungen aufweist, die daran angeordnet sind, um mit dem ersten Durchgang in Verbindung zu stehen, der mit der zweiten inneren Kammer und der Basis in Verbindung steht; der Isolierrand eine Vielzahl von zweiten Bohrungen aufweist, die daran angeordnet sind, um die erste innere Kammer mit der zweiten inneren Kammer in Verbindung zu bringen.

12. Temperatursteuerungsventil nach Anspruch 11, wobei der Ventileinsatz ferner einen mittig axialen Abschnitt (35) aufweist und einen axialen Verbindungsabschnitt (371); der Isolierrand und der vierte Endrand sich radial von dem mittig axialen Abschnitt aus erstrecken; der mittig axiale Abschnitt einen ersten Endabschnitt (351) und einen zweiten Endabschnitt (352) aufweist, und sich der erste Endabschnitt mit dem ersten Endrand des Ventileinsatzes verbindet und der zweite Endabschnitt axial mit der zweiten Endwand der Basis hält; der axiale Verbindungsabschnitt einteilig von einer Mitte eines oberen Endes des dritten Endrands aus verläuft, um aus der ersten Endwand der Basis zu ragen, um von dem Antriebsmotor angetrieben zu werden.

13. Temperatursteuerungsventil nach Anspruch 11, wobei der erste periphere Rand (31) des Gehäuses einen ersten Dichtungsring (314) aufweist, der darüber gehalten wird, um die periphere Wand der Basis zu berühren, und der erste periphere Rand des Gehäuses einen eingreifenden Rand aufweist, der daran benachbart zum ersten Dichtungsring angeordnet ist, um mit einem abgestuften Rand, der an der peripheren Wand der Basis gebildet ist, zu halten; die periphere Wand der Basis angrenzend an die zweite Endwand ein erstes Loch aufweist, das daran angeordnet ist, um mit dem ersten Durchgang in Verbindung zu stehen; der zweite periphere Rand (34) des Ventileinsatzes einen vierten Dichtungsring (341) aufweist, der daran gehalten ist, um in das erste Loch der Basis einzugreifen; die erste äußere Kammer zwischen der ersten Endwand der Basis und dem ersten Dichtungsring des Gehäuses angeordnet ist; die zweite äußere Kammer am ersten Dichtungsring des Gehäuses und dem vierten Dichtungsring des Ventileinsatzes angeordnet ist.

14. Temperatursteuerungsventil nach Anspruch 10, wobei die periphere Wand der Basis den ersten Durchgang aufweist, der mit einem mittigen Abschnitt davon gekoppelt ist; der erste periphere Rand (31) des Gehäuses zwei fünfte Dichtungsringe (317) aufweist, die daran montiert sind, um die periphere Wand der Basis zu berühren, sodass zwischen den fünften Dichtungsringen des ersten peripheren Rands des Gehäuses und der peripheren Wand der Basis eine dritte äußere Kammer definiert ist, um mit dem ersten Durchgang in Verbindung zu stehen, und die dritte äußere Kammer zwischen der ersten äußeren Kammer und der zweiten äußeren Kammer angeordnet ist, der erste periphere Rand des Gehäuses eine Vielzahl erster Ablassöffnungen aufweist, die daran relativ zur dritten äußeren Kammer (305) angeordnet sind; und der zweite periphere Rand des Ventileinsatzes einen dritten Endrand (37) aufweist, der an einem oberen Ende davon montiert ist, einen vierten Endrand (38), der an einem unteren Ende davon gesichert ist, und zwei Isolierränder, die daran angeordnet sind; der dritte Endrand relativ zur ersten Endwand der Basis ist und verwendet wird, um die erste innere Kammer mit dem zweiten peripheren Rand und dem Isolierrand zu definieren, und die erste Pore an dem zweiten peripheren Rand relativ zur ersten inneren Kammer angeordnet ist; der vierte Endrand der zweiten Endwand der Basis gegenüberliegt und verwendet wird, um die zweite innere Kammer mit dem Isolierrand und dem zweiten peripheren Rand zu definieren, und eine zweite Pore an dem zweiten peripheren Rand gegenüber der zweiten inneren Kammer angeordnet ist; zwischen den Isolierrändern und dem zweiten peripheren Rand eine dritte innere Kammer (306) definiert ist und der Isolierrand eine Vielzahl von zweiten Bohrungen aufweist, die daran angeordnet sind, um die erste innere Kammer mit der zweiten inneren Kammer in Verbindung zu bringen; der zweite periphere Rand des Ventileinsatzes mehrere zweite Ablassöffnungen aufweist, die daran relativ zur dritten inneren Kammer befestigt sind, um mit den ersten Ablassöffnungen des Gehäuses in Verbindung zu stehen, sodass die dritte innere Kammer mit der dritten äußeren Kammer in Verbindung steht.

15. Temperatursteuerungsventil nach Anspruch 14, wobei der Ventileinsatz ferner einen mittig axialen Abschnitt (35) und einen axialen Verbindungsabschnitt (371) aufweist; die Isolierränder und der vierte Endrand sich radial von dem mittig axialen Abschnitt aus erstrecken und der mittig axiale Abschnitt einen ersten Endabschnitt (351) und einen zweiten Endabschnitt (352) aufweist, sich der erste Endabschnitt mit einem unteren Ende des dritten Endrands verbindet und ein unteres Ende des ersten Endabschnitts mit dem vierten Endrand gekoppelt ist, der vierte Endrand den zweiten Endabschnitt aufweist, der sich von einer Mitte der Unterseite davon aus erstreckt; der axiale Verbindungsabschnitt einteilig von einer Mitte eines oberen Endes des dritten Endrands aus verläuft, um von dem Antriebsmotor angetrieben zu werden.

16. Temperatursteuerungsventil nach Anspruch 14, wobei der erste periphere Rand (31) des Gehäuses einen eingreifenden Rand (315) aufweist, der daran angeordnet ist, und die periphere Wand der Basis einen abgestuften Rand (238) aufweist, der darin gebildet ist, um den eingreifenden Rand zu halten.

## Revendications

1. Vanne de régulation de température comprenant :
une base (20) comprenant une première paroi d'extrémité (21), une seconde paroi d'extrémité (22) et une paroi périphérique (23) ; entre la première paroi d'extrémité, la seconde paroi d'extrémité et la paroi périphérique étant définie une rainure de réception (201), la paroi périphérique ayant un premier tunnel (231) pour l'écoulement d'eau chaude et un second tunnel (232) pour l'écoulement d'eau froide à deux positions axiales différentes respectivement, lesdits tunnels communiquant avec la rainure de réception, la paroi périphérique comprenant en outre un premier passage (233) agencé sur un côté de celle-ci à proximité de la seconde paroi d'extrémité de façon à communiquer avec la rainure de réception ;
un ensemble de régulation de température (30) installé dans la rainure de réception de la base, entre l'ensemble de régulation de température et la rainure de réception étant définie une première chambre externe (301) pour recevoir l'eau chaude et communiquer avec le premier tunnel, et une deuxième chambre externe (302) pour recevoir l'eau froide et communiquer avec le second tunnel ; l'ensemble de régulation de température comprenant une première chambre interne (303) pour recevoir l'eau chaude et une deuxième chambre interne (304) pour recevoir l'eau froide, les deux étant en communication avec le premier passage ; l'ensemble de régulation de température comprenant en outre un boîtier (30a) et un obus de vanne (30b) en contact de manière mobile avec le boîtier de façon à être entraîné en rotation ;
un moyen d'alimentation en eau (40) disposé dans le boîtier et l'obus de vanne de l'ensemble de régulation de température, et comprenant un premier orifice (41) pour l'écoulement de l'eau chaude et pour mettre en communication la première chambre externe avec la première chambre interne, comprenant un second orifice (42) pour l'écoulement de l'eau froide et pour mettre en communication la deuxième chambre externe avec la deuxième chambre interne, comprenant un premier écran (43) pour fermer le premier orifice, et comprenant un second écran (44) pour fermer le second orifice ; une partie du premier orifice qui n'est pas fermée par le premier écran définissant une section pour l'écoulement de l'eau chaude, et une partie du second orifice qui n'est pas fermée par le second écran définissant une section pour l'écoulement de l'eau froide ; la section du premier orifice pour l'écoulement de l'eau chaude et la section du second orifice pour l'écoulement de l'eau froide étant relativement augmentées ou diminuées avec la rotation de l'obus de vanne (30b) dans le boîtier (30a).

2. Vanne de régulation de température selon la revendication 1, dans laquelle la première chambre externe (301) et la deuxième chambre externe (302) sont définies par un premier rebord périphérique (31) du boîtier (30a) et une paroi périphérique (23) de la base (20) ; une partie de la première chambre interne (303) et de la deuxième chambre interne (304) est définie par le premier rebord périphérique du boîtier et l'obus de vanne ; le premier orifice (41) et le second orifice (42) du moyen d'alimentation en eau (40) sont pratiqués à deux positions axiales différentes sur le rebord périphérique (31) du boîtier (30a), individuellement, et les premier et second écrans (43, 44) sont agencés sur un côté supérieur et un côté inférieur d'un second rebord périphérique (34) de l'obus de vanne (30b), respectivement ; les premier et second écrans sont en contact avec le premier rebord périphérique du boîtier et les largeurs axiales des premier et second écrans sont augmentées ou diminuées avec un changement de position circonférentielle.

3. Vanne de régulation de température selon la revendication 2, dans laquelle la paroi périphérique (23) de la base (20) communique avec le premier passage (233), le premier rebord périphérique (31) du boîtier (30a) comprend un premier rebord d'extrémité (32) relié d'un seul tenant sur une extrémité supérieure de celui-ci, et comprend un deuxième rebord d'extrémité (33) agencé sur une extrémité inférieure de celui-ci ; le premier rebord d'extrémité (32) est opposé à la première paroi d'extrémité (21) de la base (20) pour définir une partie de la première chambre interne (303), et comprend une ouverture (322) disposée sur celui-ci ; le deuxième rebord d'extrémité est opposé à la seconde paroi d'extrémité de la base pour définir une partie de la deuxième chambre interne, et comprend un segment de fixation (331) disposé sur celui-ci et une pluralité de premiers alésages (332) agencés autour du segment de fixation ; l'obus de vanne (30b) comprend un segment centralement axial (35) s'étendant le long du second rebord périphérique (34), et un rebord isolant (36) relié d'un seul tenant avec le second rebord périphérique et le segment centralement axial ; le segment centralement axial comprend une première partie d'extrémité (351) et une seconde partie d'extrémité (352) ; la première partie d'extrémité (351) s'étend vers l'extérieur à travers l'ouverture (322) du boîtier et la première paroi d'extrémité (21) de la base (20) de façon à être entraînée en rotation ; la seconde partie d'extrémité (352) est retenue axialement avec le segment de fixation (331) du boîtier ; le rebord isolant (36) est utilisé pour séparer la première chambre interne (303) de la deuxième chambre interne (304), et comprend une pluralité de deuxièmes alésages (361) agencés sur celui-ci pour mettre en communication la première chambre interne (303) avec la deuxième chambre interne (304), la deuxième chambre interne (304) communiquant avec le premier passage (233) par les premiers alésages (332) du deuxième rebord d'extrémité du boîtier.

4. Vanne de régulation de température selon la revendication 2, dans laquelle le premier rebord périphérique (31) comprend une première paroi en saillie (311), une deuxième paroi en saillie (312) et une troisième paroi en saillie (313) s'étendant radialement à partir de celui-ci, respectivement, et les première, deuxième et troisième parois en saillie comprennent individuellement une première bague d'étanchéité (314) retenue sur celles-ci pour venir en prise avec la paroi périphérique de la base, de telle sorte qu'entre le premier joint d'étanchéité de la première paroi en saillie et la première bague d'étanchéité de la deuxième paroi en saillie est définie la première chambre externe (301) et qu'entre la première bague d'étanchéité de la deuxième paroi en saillie et la première bague d'étanchéité de la troisième paroi en saillie est définie la deuxième chambre externe (302).

5. Vanne de régulation de température selon la revendication 1, dans laquelle la base (20) comprend en outre un corps (20a) et un boîtier supérieur (20b), le boîtier comprend la paroi périphérique et la seconde paroi d'extrémité de la base formées dans celui-ci, et le boîtier supérieur est fixé à une ouverture attachée à une extrémité supérieure du corps de façon à former la première paroi d'extrémité de la base, et l'obus de vanne s'étend à l'extérieur du boîtier supérieur pour être entraîné en rotation.

6. Vanne de régulation de température selon la revendication 5, dans laquelle le boîtier supérieur comprend un support de moteur (213) pour recevoir un moteur d'entraînement (50) de telle sorte qu'une partie de l'obus de vanne s'étendant hors du boîtier supérieur est entraînée par le moteur d'entraînement.

7. Vanne de régulation de température selon la revendication 1, comprenant en outre un couvercle (60), et le couvercle comprend un élément cylindrique (61) et un bouchon (62) vissé sur un côté de l'élément cylindrique ; la base est reçue dans le couvercle ; et la base comprend un corps et un boîtier supérieur ; le corps comprend la paroi périphérique et la seconde paroi d'extrémité de la base formées dans celui-ci, et le boîtier supérieur comprend la seconde paroi d'extrémité de la base définie dans celui-ci, le boîtier supérieur est en prise de manière mobile avec le corps et est retenu par le bouchon ; l'obus de vanne s'étend hors du boîtier supérieur et du bouchon pour être entraîné en rotation.

8. Vanne de régulation de température selon la revendication 1, comprenant en outre un moteur d'entraînement (50) pour entraîner l'obus de vanne (30b) de l'ensemble de régulation de température (30).

9. Vanne de régulation de température selon la revendication 2, dans laquelle la seconde paroi d'extrémité (22) de la base comprend le premier passage (233) communiquant sur celle-ci ; le premier rebord périphérique (31) du boîtier (30a) comprend un orifice fixé à une extrémité de celui-ci à l'opposé de la première paroi d'extrémité de la base, de telle sorte que la première paroi d'extrémité de la base définit une partie de la première chambre interne, et une autre extrémité de la paroi périphérique est reliée à une seconde paroi d'extrémité de la base pour définir une partie de la deuxième chambre interne ; le deuxième rebord d'extrémité (33) du boîtier comprend un segment de fixation (331) disposé sur celui-ci et une pluralité de premiers alésages agencés autour du segment de fixation ; l'obus de vanne comprend un segment centralement axial s'étendant le long du premier rebord périphérique, et un rebord isolant relié entre le premier rebord périphérique et le segment centralement axial ; le segment centralement axial comprend une première partie d'extrémité et une seconde partie d'extrémité ; la première partie d'extrémité s'étend hors de la première paroi d'extrémité de la base pour être entraînée en rotation ; la seconde partie d'extrémité est retenue axialement avec le segment de fixation du boîtier ; le rebord isolant est utilisé pour séparer la première chambre interne (303) de la deuxième chambre interne (304), et comprend une pluralité de seconds alésages agencés sur celui-ci pour mettre en communication la première chambre interne avec la deuxième chambre interne, la deuxième chambre interne communiquant avec le premier passage par les premiers alésages du deuxième rebord d'extrémité du boîtier.

10. Vanne de régulation de température selon la revendication 1, dans laquelle la première chambre externe (301) et la deuxième chambre externe (302) sont définies par la rainure de réception de la base et le premier rebord périphérique du boîtier, et l'obus de vanne ; la première chambre interne (303) et la deuxième chambre interne (304) sont définies dans l'obus de vanne ; le premier orifice et le second orifice du moyen d'alimentation en eau sont fixés à deux positions axiales différentes du second rebord périphérique de l'obus de vanne, individuellement, et le premier écran s'étend à partir d'une extrémité supérieure du premier rebord périphérique du boîtier, le second écran s'étend le long d'une extrémité inférieure du premier rebord périphérique du boîtier ; les premier et second écrans sont en contact avec le second rebord périphérique de l'obus de vanne et les largeurs axiales des premier et second écrans sont augmentées ou diminuées avec un changement de position circonférentielle.

11. Vanne de régulation de température selon la revendication 10, dans laquelle la paroi périphérique de la base communique avec le premier passage, le second rebord périphérique (34) de l'obus de vanne comprend un troisième rebord d'extrémité (37), un quatrième rebord d'extrémité (38) et un rebord isolant (36) agencés sur deux extrémités et une partie centrale de celui-ci, respectivement ; le troisième rebord d'extrémité est opposé à la première paroi d'extrémité de la base et utilisé pour définir la première chambre interne avec le rebord isolant et le second rebord périphérique de l'obus de vanne, et le premier orifice est fixé sur le second rebord périphérique de l'obus de vanne par rapport à la première chambre interne ; le quatrième rebord d'extrémité est opposé à une seconde paroi d'extrémité de la base pour définir une deuxième chambre interne avec le rebord isolant et le second rebord périphérique de l'obus de vanne, et le second orifice est disposé sur le second rebord périphérique par rapport à la deuxième chambre interne, et comprend une pluralité de troisièmes alésages agencés sur celui-ci pour communiquer avec le premier passage qui est en communication avec la deuxième chambre interne et la base ; le rebord isolant comprend une pluralité de deuxièmes alésages agencés sur celui-ci pour mettre en communication la première chambre interne avec la deuxième chambre interne.

12. Vanne de régulation de température selon la revendication 11, dans laquelle l'obus de vanne comprend en outre un segment centralement axial (35) et une section axiale de liaison (371) ; le rebord isolant et le quatrième rebord d'extrémité s'étendent radialement à partir du segment centralement axial ; le segment centralement axial comprend une première partie d'extrémité (351) et une seconde partie d'extrémité (352), et la première partie d'extrémité est reliée au premier rebord d'extrémité de l'obus de vanne, et la seconde partie d'extrémité est retenue axialement avec la seconde paroi d'extrémité de la base ; la section axiale de liaison s'étend d'un seul tenant à partir d'un centre d'une extrémité supérieure du troisième rebord d'extrémité pour s'étendre hors de la première paroi d'extrémité de la base pour être entraînée par le moteur d'entraînement.

13. Vanne de régulation de température selon la revendication 11, dans laquelle le premier rebord périphérique (31) du boîtier comprend une première bague d'étanchéité (314) retenue sur celui-ci pour venir en prise avec la paroi périphérique de la base, et le premier rebord périphérique du boîtier comprend une périphérie de prise disposée sur celui-ci au voisinage de la première bague d'étanchéité pour retenir une périphérie étagée formée sur la paroi périphérique de la base ; la paroi périphérique de la base au voisinage de la seconde paroi d'extrémité comprend un premier trou disposé sur celle-ci pour communiquer avec le premier passage ; le second rebord périphérique (34) de l'obus de vanne comprend une quatrième bague d'étanchéité (341) retenue sur celui-ci pour venir en prise avec le premier trou de la base ; la première chambre externe est disposée entre la première paroi d'extrémité de la base et la première bague d'étanchéité du boîtier ; la deuxième chambre externe est disposée à la première bague d'étanchéité du boîtier et la quatrième bague d'étanchéité de l'obus de vanne.

14. Vanne de régulation de température selon la revendication 10, dans laquelle la paroi périphérique de la base comprend le premier passage couplé à une section centrale de celle-ci ; le premier rebord périphérique (31) du boîtier comprend deux cinquièmes bagues d'étanchéité (317) montées sur celui-ci pour venir en prise avec la paroi périphérique de la base, de telle sorte qu'entre les cinquièmes bagues d'étanchéité du premier rebord périphérique du boîtier et la paroi périphérique de la base est définie une troisième chambre externe pour communiquer avec le premier passage, et la troisième chambre externe est disposée entre la première chambre externe et la deuxième chambre externe, le premier rebord périphérique du boîtier comprend une pluralité de premières ouvertures de décharge agencées sur celui-ci par rapport à la troisième chambre externe (305) ; et le second rebord périphérique de l'obus de vanne comprend un troisième rebord d'extrémité (37) monté sur une extrémité supérieure de celui-ci, un quatrième rebord d'extrémité (38) fixé sur une extrémité inférieure de celui-ci, et deux rebords isolant agencés sur celui-ci ; le troisième rebord d'extrémité est par rapport à la première paroi d'extrémité de la base et utilisé pour définir la première chambre interne avec le second rebord périphérique et le rebord isolant, et le premier orifice est disposé sur le second rebord périphérique par rapport à la première chambre interne ; le quatrième rebord d'extrémité est opposé à la seconde paroi d'extrémité de la base et utilisé pour définir la deuxième chambre interne avec le rebord isolant et le second rebord périphérique, et un second orifice est disposé sur le second rebord périphérique à l'opposé de la deuxième chambre interne ; entre les rebords isolants et le second rebord périphérique est définie une troisième chambre interne (306), et le rebord isolant comprend une pluralité de deuxièmes alésages agencés sur celui-ci pour mettre en communication la première chambre interne avec la deuxième chambre interne ; le second rebord périphérique de l'obus de vanne comprend un certain nombre de secondes ouvertures de décharge attachées sur celui-ci par rapport à la troisième chambre interne de façon à communiquer avec les premières ouvertures de décharge du boîtier, de telle sorte que la troisième chambre interne communique avec la troisième chambre externe.

15. Vanne de régulation de température selon la revendication 14, dans laquelle l'obus de vanne comprend en outre un segment centralement axial (35) et une section axiale de liaison (371), les rebords isolants et le quatrième rebord d'extrémité s'étendent radialement à partir du segment centralement axial ; et le segment centralement axial comprend une première partie d'extrémité (351) et une seconde partie d'extrémité (352), la première partie d'extrémité est reliée à une extrémité inférieure du troisième rebord d'extrémité, et une extrémité inférieure de la première partie d'extrémité est couplée au quatrième rebord d'extrémité, le quatrième rebord d'extrémité comprend la seconde partie d'extrémité s'étendant à partir d'un centre de la surface inférieure de celui-ci ; la section axiale de liaison s'étendant d'un seul tenant à partir d'un centre d'une extrémité supérieure du troisième rebord d'extrémité pour être entraînée par le moteur d'entraînement.

16. Vanne de régulation de température selon la revendication 14, dans laquelle le premier rebord périphérique (31) du boîtier comprend une périphérie de prise (315) disposée sur celui-ci, et la paroi périphérique de la base comprend une périphérie étagée (238) formée dans celle-ci pour retenir la périphérie de prise.
